# FASCICULE DE BREVET EUROPEEN

(11) **EP 1 708 819 B1**
(45) Date de publication et mention de la délivrance du brevet: **03.05.2017**
(21) Numéro de dépôt: 04805658.4
(22) Date de dépôt: 08.12.2004
(51) Int. Cl.: B03B 5/44, B03B 9/06, B09B 3/00

(54) **SEPARATION SELECTIVE DE MATERIAUX POLYMERES FRAGMENTES USAGES, A l'aide d'UNE SUSPENSION AQUEUSE DENSE DYNAMIQUEMENT STABILISEE**
TRENNVERFAHREN FÜR KUNSTSTOFFE UNTER ANWENDUNG EINER DYNAMISCH STABILISIERTEN WÄSSRIGEN SUSPENSION
SELECTIVE SEPARATION OF USED FRAGMENTED POLYMERIC MATERIALS BY USING A DYNAMICALLY STABILIZED DENSE AQUEOUS SUSPENSION

(30) Priorité: 10.12.2003 FR 0314472
(43) Date de publication de la demande: 11.10.2006
(73) Titulaire: Galloo Plastics (S.A.), 59250 Halluin (FR)
(72) Inventeur: DE FERAUDY, Hugues, F-69220 Charentay (FR); SEINERA, Henri, F-69600 Oullins (FR)
(74) Mandataire: IP Trust
(86) Numéro de dépôt international: PCT/FR2004/003150
(87) Numéro de publication internationale: WO 2005/065830

(56) Documents cités:
- WO-A-2004/009200
- DE-A- 4 334 570
- US-A- 5 653 867
- US-A- 5 738 222
- US-A1- 2003 027 877
- US-B1- 6 335 376
- DREIRINGER G ET AL: "WIEDERAUFBEREITUNGS-ANLAGE FUER PVC-FOLIEN" KUNSTSTOFFBERATER, KUNSTSTOFF VERLAG. ISERNHAGEN, DE, vol. 38, no. 6, 1 juin 1993 (1993-06-01), pages 26-30, XP000382027 ISSN: 0172-6374

## Description

### Domaine de l'invention

L'invention concerne un procédé de séparation sélective de matériaux organiques de synthèse en mélange, tels que des polymères et/ou des copolymères qui peuvent être chargés ou non, ignifugés ou non, adjuvantés ou non, qui sont des déchets à recycler pour les valoriser, ces matériaux organiques de synthèse pouvant être issus de la destruction par broyage d'automobiles et de biens de consommation durables parvenus en fin de vie, ledit procédé de séparation sélective agissant par séparation de ces matériaux à un seuil de densité choisi dans un milieu dense formé de suspensions liquides séparatives fluides composées de particules pulvérulentes dispersées dans une phase aqueuse, ces suspensions étant dynamiquement stabilisées à la valeur seuil de densité choisie pour provoquer la séparation sélective d'une fraction déterminée du mélange des matériaux usagés à séparer.

Les matériaux organiques de synthèse usagés concernés proviennent généralement de résidus de broyage automobile et de biens de consommation durables, arrivés en fin de vie, dans lesquels une multiplicité de types de matériaux organiques de synthèse, que sont les polymères et/ou des copolymères chargés ou non, ignifugés ou non, adjuvantés ou non, sont à considérer comme valorisables et dans lesquels une multiplicité d'autres matériaux sont considérés comme des contaminants gênants tels que des métaux, des minéraux et autres contaminants divers qui doivent être préalablement éliminés. D'autres déchets, tels que des déchets industriels mélangés contenant des matériaux organiques de synthèse et des déchets d'emballage tels que des polymères et/ou copolymères en provenance de collectes municipales et contenant également des matériaux polymères mélangés peuvent être tout autant considérés comme potentiellement valorisables.

Dans les industries de recyclage de matériaux organiques de synthèse usagés à valoriser, sont pratiqués divers procédés de séparation des constituants des flux, plus ou moins polluants et plus ou moins pollués, plus ou moins concentrés en matériaux organiques de synthèse valorisables qu'il faut séparer des polluants, concentrer et trier par flux homogènes de types de matériaux organiques de synthèse présents, tels que par exemple polyéthylène, polypropylène, polystyrène, (PS), copolymère acrylonitrile-butadiène-styrène, (ABS), polyamides (PA), chlorure de polyvinyle (PVC), polyesters, polyuréthane, polycarbonate, copolymères acryliques ou métacryliques ou autres, tous les polymères pouvant être chargés, adjuvantés, ignifugés ou non.

Ces procédés connus permettent actuellement d'extraire et de séparer des flux à traiter, constitués de mélanges de matériaux organiques de synthèse à valoriser et de matériaux contaminants à éliminer, ces flux comprenant :
✔ une phase de matériaux organiques de synthèse de densité inférieure à 1,
✔ une phase de matériaux organiques de synthèse de densité supérieure ou égale à 1,
✔ une phase de matériaux organiques de synthèse, formée par exemple de mousses de polyéthylène, de polyuréthane, de déchets de films, de fils ou autres,
✔ une phase de matériaux contaminants à éliminer dont les constituants ne sont pas valorisables dans de tels procédés de séparation et de valorisation, par exemple du sable, des débris de verre, des débris de bois, des restes de métaux ou autres.

L'un de ces procédés de séparation de matériaux polymères de tous types provenant de broyage de véhicules automobiles et/ou d'autres objets en fin de vie (décrit dans le brevet européen EP 0918606 B), consiste, après une étape de broyage assurant la fragmentation des matériaux organiques de synthèse, préférentiellement à effectuer une séparation mécanique par facteur de forme, suivie d'une première étape de séparation par densité qui provoque la séparation de tous les matériaux organiques de synthèse à valoriser en deux flux :
✔ l'un de densité inférieure à 1, comprenant notamment et par exemple les polyoléfines non chargées, telles que les polyéthylènes (d=0,92 à 0,95), les polypropylènes (d autour de 0,9), les copolymères d'éthylène et de vinylacétate, les copolymères d'éthylène-propylène caoutchouc (E.P.R.), les copolymères d'éthylène-propylène-diène-monomère (E.P.D.M.), les mousses de polyéthylène (PE), de polypropylène (PP), de polyuréthane (PU) ou autres,
✔ l'autre, de densité supérieure ou égale à 1, comprenant notamment et par exemple :
   - du polystyrène : PS non chargé (d autour de 1,05)
   - des copolymères acrylonitrile-butadiène-styrène : ABS non chargé (d environ 1,07)
   - des chlorures de polyvinyle : PVC rigide non chargé (d autour de 1,30 à 1,40) et chargé (d autour de 1,40 à 1,55), plastifiés tels que plastisol et mousses de PVC
   - des polycarbonates : PC non chargé, de densité d=1,20 à 1,24,PC chargés à 20% de fibres de verre de densité d=1,3 ou encore PC chargé à 30% de fibres de verre de densité d=1,44
   - des caoutchoucs thermoplastiques, sauf les caoutchoucs alvérolaires thermodurcissables
   - des polyuréthanes : PU chargés (d=1,21 environ)
   - des polypropylènes chargés Talc (PP Talc chargé entre 5% et 40% en talc)
   - des polyéthylènes chargés : (PE chargés entre 2% et 40% de charges
   - des polyesters insaturés (d allant d'environ 1,10 à 1,13)
   - des polyesters saturés (d ≥ 1,20), chargés ou non (souvent chargés en fibres de verre)
   - des polyamides : PA₆ (d=1,13), PA₆,₆ (d=1,14), PA_{6.10} (d=1,08), PA₁₁ (d=1,04), PA₁₂ (d=1,02), chargés ou non chargés
   - des polyméthacrylates de méthyle : PMMA (d=1,18)
   - autres.

Ces deux flux sont ultérieurement traités pour en extraire chaque composant, les séparer selon des flux homogènes et les traiter pour en faire des granulés formulés, directement utilisables selon les procédés de la plasturgie.

Si le flux du mélange de matériaux organiques de synthèse valorisables de densité inférieure à 1 est efficacement traité par une succession d'étapes de séparation en milieu aqueux, par des bains de densité adaptée permettant une sélection fine des divers composés polymères présents dans ledit flux, il n'en est pas de même du flux du mélange des matériaux organiques de densité supérieure ou égale à 1 dont les divers matériaux organiques de synthèse s'avèrent difficilement séparables.

Pour ce deuxième flux, en effet, qui se compose d'un mélange de polymère, et/ou copolymères chargés ou non, dont les densités s'étalent de 1 à environ 1,6, la séparation des divers matériaux organiques de synthèse présents dans le mélange s'effectue par densité dans des séparateurs hydrauliques dont le milieu liquide de séparation est formé d'eau, d'agents tensio-actifs, et de composés minéraux tels que des argiles et en particulier de la bentonite et éventuellement des composés solubles dans l'eau tels que des sels minéraux, composés mis en oeuvre pour augmenter la densité de la phase liquide et la porter à une valeur de densité permettant en principe une séparation des divers matériaux organiques de synthèse en deux phases distinctes, l'une surnageant et l'autre décantant dans le fond du séparateur, chaque phase formant un nouveau flux soumis à son tour à une nouvelle séparation par densité.

Toutefois, il se révèle à l'usage, en particulier dans des installations de séparation par densité, en service dans des ensembles industriels de traitement de matériaux organiques de synthèse usagés à valoriser, que les milieux liquides de séparation ne sont pas suffisamment stables pour permettre des séparations sélectives pointues par densité, c'est-à-dire procurant des séparations très homogènes en types de matériaux triés, les flux provenant de la séparation pouvant être des mélanges de plusieurs matériaux dont les densités respectives sont très proches les unes des autres.

Il a été en effet observé divers phénomènes particulièrement gênants se développant au sein de ces milieux liquides de séparation par densité ; ces phénomènes gênants, qui sont de réels inconvénients, pouvant être :
✔ une évolution de la rhéologie desdits milieux liquides qui se manifeste par une variation perturbante de leur viscosité vers un état plus fluide ou plus pâteux,
✔ une dérive ou une variation de la densité apparente des milieux liquides, la densité ne pouvant rester stable au niveau seuil initialement choisi pour une bonne séparation des matériaux organiques de synthèse usagés à valoriser, cette dérive (variation) provoquant une évolution de la composition des flux séparés par un milieu liquide dense,
✔ une décantation dans le temps d'une partie des composés minéraux dispersés dans le milieu aqueux pour créer la densité choisie, en partie à l'origine de l'évolution de la densité du milieu liquide de séparation,
✔ une quasi-impossibilité de pouvoir séparer finement des matériaux organiques de synthèse usagés à valoriser, chargés ou non, dès lors que la séparation par densité des uns et des autres matériaux doit se faire sur une différence de densité Δ=|0,001|, c'est-à-dire dans un intervalle autour de la densité choisie "ds" de "ds ±0,005".

Il existe dès lors un problème certain et important quant à la séparation par densité très fine des matériaux organiques de synthèse usagés à valoriser tels que sont des polymères et/ou copolymères chargés ou non qui sont des déchets usagés à recycler, issus de la destruction par broyage d'automobiles et de biens de consommation durables parvenus en fin de vie, pour obtenir des flux homogènes de matériaux séparés, sans qu'il y ait de dérive de la densité et mélange de matériaux sélectionnés.

### Etat de la technique

Séparer le mieux possible des uns des autres des matériaux solides difficilement séparables, de densité au moins égale à 1 et généralement très supérieure, en un milieu liquide dense, a fait l'objet de nombreux travaux de recherche et d'applications industrielles.

Le milieu liquide dense de l'état de la technique, de densité généralement supérieure à 1, est formé d'une phase aqueuse dans laquelle :
✔ peuvent être dissouts des sels minéraux solubles pour augmenter la densité réelle de la phase aqueuse jusqu'à une valeur de densité souhaitée,
✔ peuvent être dispersées des argiles pulvérulentes pour créer une suspension de densité apparente jusqu'à obtenir la densité souhaitée,
✔ peuvent être combinés les deux moyens précités que sont les solubi lisations de sels augmentant la densité de la phase aqueuse et la dispersion des argiles dans la phase aqueuse à densité augmentée, pour augmenter, dans la limité du possible, la stabilité de la suspension des argiles dans la phase aqueuse densifiée.

Dans le cas, par exemple, du traitement de minerais, les procédés de densité pratiqués consistent à séparer les minerais de leur gangue, après une action mécanique de broyage à la maille de libération, dans une suspension aqueuse d'argile pulvérulente dispersée, l'argile agissant en tant qu'agent densifiant, à la concentration adéquate pour permettre la séparation des composants à séparer en deux phases, l'une surnageante et l'autre décantant.

Toutefois, aux concentrations d'argile mise en oeuvre pour préparer les suspensions densifiées de séparation, la stabilité desdites suspensions est toute relative car les concentrations en argile peuvent évoluer dans le temps, selon l'évolution de la composition de la gangue présente à éliminer dont la densité n'est pas stable et varie selon la zone d'extraction de même que la densité du minerai à extraire.

Dans ces procédés, le seuil de densité choisi pour la séparation est relativement grossier et ne peut attendre habituellement en sensibilité de séparation le premier chiffre après la virgule, c'est-à-dire par exemple un milieu de séparation densifié dont la densité apparente sera comprise entre 1,4 et 1,5.

Dans le cas, par exemple, des matériaux organiques de synthèse usagés à valoriser que sont les matériaux polymères fragmentés à séparer entre eux ou à séparer de leurs polluants, sont pratiqués des procédés de séparation par milieux liquides denses, utilisant la solubilisation de sels minéraux dans la phase aqueuse ou la dispersion d'argiles pulvérulentes en quantité adéquate pour établir la densité seuil du partage en présence d'agents tensio-actifs.

Des documents ont décrit de tels milieux denses liquides de séparation. Un premier document (DE19964175) décrit une technologie permettant la séparation d'un mélange hétérogène de matériaux polymères fragmentés, selon leur densité apparente, dans une solution aqueuse saline constituant le milieu liquide dense ayant une densité prédéterminée, la séparation s'effectuant selon un flux laminaire nécessitant une optimisation des conditions de débits de la solution aqueuse saline et du mélange de matériaux polymères à séparer.

Le procédé ainsi évoqué apparaît être plutôt adapté seulement à une valeur unique de densité, tant il semble difficile de faire évoluer la densité du milieu liquide dense selon un large éventail de valeurs, cette évolution étant liée au fait que pour parvenir à des densités relativement élevées, il est nécessaire de mettre en oeuvre des concentrations de plus en plus importantes en sels solubilisés ; ce procédé, dès lors, peut devenir d'un coût d'exploitation inacceptable pour séparer des matériaux organiques de synthèse usagés à valoriser de très faible valeur ajoutée, et ce d'autant plus que la technologie utilisée est soumise à une action corrosive évidente de la part du milieu liquide salin.

Un autre document (US 3,857,489) décrit un procédé de séparation d'un flux de matériaux à séparer dans un milieu aqueux dense fait d'une suspension d'argile pulvérulente, dispersée dans de l'eau dont la stabilité est améliorée grâce à l'ajout dans la suspension d'un agent (tensio-actif) stabilisant de l'argile de type hétéro polysaccharides hydrosolubles. Mais la stabilité de la suspension séparative n'est pas suffisamment acquise, un phénomène de décantation des particules d'argiles se produisant, qui provoque une variation importante du seuil de densité choisi pour la séparation sélective.

Un autre document (EP 0918 606 B1), tel qu'il a été précédemment évoqué, décrit un procédé de séparation de matériaux polymères fragmentés, provenant de broyage de véhicules automobiles et/ou autres objets en fin de vie qui pratique, sur un flux constitué d'un mélange de polymères et/ou copolymères chargés ou non, dont les densités s'étagent de 1 à 1,6, la séparation en milieu liquide dense mettant en oeuvre une suspension faite d'argile pulvérulente dispersée dans de l'eau, afin d'obtenir un milieu séparatif par densité à un seuil de densité choisi. Mais, comme il a été dit, une telle suspension séparative présente des inconvénients peu surmontables comme une variation de la rhéologie, de la densité dans le temps, une décantation de l'argile pulvérulente et une impossibilité de fixer un seuil de densité particulièrement fin portant par exemple sur le deuxième chiffre après la virgule et de l'y maintenir. Un autre document (DE 4335570) décrit un procédé de traitement de déchets de matière plastique concassés dans lequel les déchets de matière plastique concassés sont séparés par densité au moyen d'un liquide porteur dans une étape de séparation à l'aide d'un procédé de séparation par voie humide- mécanique. Le liquide porteur est séparé des produits de séparation et de réutilisé dans l'étape de séparation. Un autre document (US 6 335 376 B1) décrit une méthode de séparation des polymères présents dans un mélange de différents polymères, ne contenant ni métaux, ni polluants à éliminer tels que verre, mousse, bois ou autres. La méthode revendiquée consiste à chauffer le mélange de ces différents polymères après une sélection dimensionnelle, pour provoquer le bullage d'au moins l'un des polymères dudit mélange à séparer et à le séparer dudit mélange grâce à un changement de la densité apparente dudit polymère, provoqué par le chauffage.

Cette modification de la densité apparente provoque une différentiation entre l'un au moins des polymères du mélange chauffé et les autres polymères du mélange et une séparation sélective par étapes successives d'altérations des densités de chaque polymère.

Dès lors, ce procédé utilise des moyens de séparation particuliers mettant en oeuvre un moyen thermique qui provoque l'amorce d'une déstructuration préjudiciable des matériaux polymères à séparer.

Un autre document, l'article KUNSTSTOFFBERATER, KUNSTSTOFF VERLAG décrit une installation spécifiquement destiné à la production de feuilles de PVC, de telle sorte que le flux d'entrée contient 95 à 100% de PVC-H et PVC-P et 0 à 5% d'impureté, comprenant un broyeur, un laveur, et des séparateurs par densité tel que. Ce procédé comporte deux étapes successives de séparations par densité réalisées en hydrocyclone à un débit de 200 m³/h, à l'aide d'un milieu liquide dense qui est une suspension aqueuse de sulfate de baryum permettant d'augmenter la densité de l'eau et d'atteindre les densités fixées comme seuil de séparation (d=1,2 et d=1,5).

Cependant, cette installation ne conduit pas à la séparation des PVC-H (d=1,34 à 1,43) et PVC-P (d= 1,20 à 1,35) entre eux car les deux seuils de densité de séparation choisies sont telles qu'ils encadrent les valeurs des densités des PVC-H et PVC-P. Dès lors, seule la séparation du mélange des PVC-H et PVC-P d'avec des impuretés, se produit. De plus, cette installation ne permet pas une séparation particulièrement fine, car lors de la première séparation à la densité d=1,2, les produits de densité inférieure à 1,2, tels que les polyoléfines et le bois, surnagent. Quant aux produits de densité supérieure à 1,2 qui décantent, ils constituent un mélange formé de PVC-H et PVC-P et des impuretés qui subit la deuxième séparation par densité à d=1,5. Au cours de cette deuxième étape de séparation, les produits de densité supérieure à 1,5, tels que les métaux le verre et le sable, sédimentent et le mélange des PVC-H et PVC-P et vraisemblablement quelques impuretés de densité comprises entre 1,2 et 1,5 surnage et est récupéré.

Ainsi, l'état de la technique propose divers procédés de séparation de matériaux à séparer, tels ceux résultant du broyage de véhicules et/ou de biens de consommation durables en fin de vie comme l'électroménager, les matériels électroniques ou autres qui, après la récupération des métaux, sont des matériaux organiques de synthèse, en mettant en oeuvre des milieux denses liquides, avec tous les inconvénients évoqués précédemment.

Mais l'état de la technique ne propose pas de procédés de séparation particulièrement fine des divers types de constituants, de densité au moins égale à 1 et généralement très supérieure à 1, formant un mélange de matériaux organiques de synthèse usagés et à valoriser, se présentant sous un aspect fragmentaire.

### Objectifs de l'invention

Le problème industriel qui se pose au terme de l'examen de l'état de la technique et qui apparaît encore insoluble à travers cet état de la technique est de réaliser un procédé et une installation correspondants de séparation fine par différence de densité au moyen d'un milieu liquide dense de mélanges complexes de matériaux de synthèse organiques usagés de tous types, à séparer type par type, ayant chacun une densité au moins égale à 1, en vue de les valoriser par recyclage, tous ces matériaux étant des polymères et/ou copolymères thermoplastiques ou thermodurs, chargés ou non, ignifugés ou non, adjuvantés ou non.

A titre d'exemples peuvent être cités tous les thermoplastiques tels que polyoléfines et copolymères oléfiniques, PVC et dérivés, polystyrène et ses copolymères, dérivés cellulosiques, polyamides, polymères acryliques et autres..., mais aussi les thermodurcissables tels que polyesters insaturés, polyuréthanes réticulés, phénoplastes, aminoplastes, résines époxydes et autres et tous les polymères spéciaux tels que polycarbonate, polyimides, polyuréthanes linéaires, polyesters saturés, silicones, polymères fluorés ou autre, les élastomères de synthèse et autres, ces produits organiques pouvant être utilisés seuls ou en mélange, mais pouvant aussi être modifiés par des charges minérales, des fibres de renfort, des retardateurs de flamme, des additifs chocs, des colorants, des stabilisants lumière ou thermique, des lubrifiants, des antistatiques, des agents d'expansion et autres....

De nombreux objectifs sont des lors assignés à l'invention pour que l'essentiel, au moins des inconvénients manifestes dans l'état de la technique, soit éliminé.

Un premier objet de l'invention est de créer un procédé et son installation industrielle correspondante permettant de réaliser une séparation sélective de matériaux organiques de synthèse en mélange, tels que polymères et/ou copolymères chargés ou non, ignifugés ou non, adjuvantés ou non, de divers type, qui sont des déchets usagés à recycler pour les valoriser, et sont issus de la destruction par broyage d'automobiles et de biens de consommation durables en fin de vie, par densité à un seuil de densité choisi "ds" pour provoquer leur séparation, la densité s'effectuant dans un milieu liquide dense formé de suspensions séparatives stables composées de particules pulvérulentes dispersées dans une phase aqueuse.

D'autres objets de l'invention sont de créer un procédé et une installation industrielle permettant de réaliser la séparation sélective des matériaux précités, par densité, grâce auxquels :
✔ la rhéologie des suspensions séparatives reste stable et ne subit aucune déviance se manifestant par une fluidisation ou un épaississement du milieu liquide dense,
✔ la densité apparente "ds" établie pour chaque suspension séparative ne subit aucune dérive par effet de déstabilisation de la suspension dans le temps provoquant la décantation de particules pulvérulentes initialement dispersées en plus ou moins grande quantité,
✔ la quasi-totalité au moins des particules pulvérulentes participent activement et effectivement à la création de la densité apparente des suspensions séparatives en raison de leur homogénéité dimensionnelle, sans qu'il soit nécessaire d'éliminer au fur et à mesure des particules sédimentant dans le milieu liquide dense, parce que dimensionnellement trop grandes et dès lors trop lourdes,
✔ la séparation sélective et fine des divers matériaux organiques de synthèse constitutifs d'un mélange à trier dont la sensibilité de tri d'un matériau à un autre peut atteindre un différentiel de Δ=|0,001| ou encore la valeur de la densité ciblée "ds" à ±0,0005.

### Exposé sommaire de l'invention

Selon les divers objets précédemment énoncés, le procédé de séparation sélective par densité de matériaux organiques de synthèse usagés et à recycler pour les valoriser, de densité au moins égale à 1, issus de la destruction par broyage de bien durables parvenus en fin de vie, tels que des véhicules automobiles, le matériel électroménager, le matériel électronique, permet l'élimination des inconvénients décelés dans l'état de la technique et l'apport, simultanément, de substantielles améliorations par rapport aux moyens antérieurement décrits.

Selon l'invention, le procédé de séparation sélective de chacun des constituants d'un mélange de matériaux organiques de synthèse que sont les polymères et/ou les copolymères, en particulier usagés et à valoriser par recyclage, de densité au moins égale à 1, se présentant sous une forme fragmentée, consistant à effectuer leur séparation par l'introduction dudit mélange dans un milieu liquide dense, qui est une suspension aqueuse de particules pulvérulentes dispersées en quantité adéquate dans une phase aqueuse, pour créer un niveau de densité "ds" choisi comme seuil de séparation des divers matériaux organiques de synthèse fragmentés à séparer sélectivement par type, caractérisé en ce que ladite suspension séparative est rendue sélective, stable et invariante en densité à un niveau de précision de ±0,0005 par rapport au seuil de densité "ds" choisi pour la séparation sélective:
a) par la sélection dimensionnelle de particules pulvérulentes dont la coupe granulométrique est d'au plus 30 µm, préférentiellement d'au plus 20 µm, et très préférentiellement d'au plus 5 µm, ces particules solides pulvérulentes ainsi dimensionnées étant dispersées et présentes dans une phase aqueuse en quantité suffisante pour atteindre le seuil de densité "ds" choisi, et
b) par la mise en oeuvre d'au moins un moyen dynamique de stabilisation en créant un débit circulant de ladite suspension séparative, ledit débit circulant étant au plus de 40 m³/h.

### Description détaillée de l'invention

Le procédé de séparation sélective de mélange de matériaux organiques de synthèse usagés s'appliquant à tous les matériaux polymères et/ou copolymères, mélangés et fragmentés, chargés ou non, que l'on cherche à valoriser, qu'ils soient d'origine thermoplastique et/ou thermodur.

Selon le procédé de l'invention, les particules pulvérulentes mises en oeuvre dans la formation de la suspension aqueuse de séparation fine des divers types de matériaux organiques de synthèse, en particulier usagés, à valoriser, se présentant sous la forme d'un mélange de matériaux fragmentés, sont choisies de telle sorte que :
✔ la rhéologie reste stable dans le temps, c'est-à-dire exempte de variation significative de son état vers un état plus fluide ou plus dense,
✔ la densité apparente "ds" choisie comme le seuil de séparation fine et d'extraction d'un type de matériau organique de synthèse à extraire du mélange de matériaux usagés le contenant atteigne et conserve cette valeur de densité apparente "ds" avec une précision ciblée dans l'intervalle "ds ±0,0005" donnant ainsi une extrême sensibilité de tri par densité d'un matériau à un autre matériau.

Les particules pulvérulentes mises en oeuvre selon l'invention peuvent être d'origine naturelle ou synthétique.

Quand les particules pulvérulentes sont d'origine naturelle, elles peuvent être choisies dans le groupe des matériaux minéraux pulvérulents constitué par les argiles, susceptibles de former une suspension plastique stable au contact de l'eau, qui peuvent appartenir aux familles constituées par le groupe des kaolinites, telles que par exemple la kaolinite, la dickite, l'halloysite, les kaolinites désordonnées, les serpentines ; le groupe des micas, tels que par exemple muscovite, biotite et paragonite, la pyrophyllite et le talc, les illites et la glauconite ; le groupe des montmorillonites, telles que par exemple le beidéllite, la stévensite, la saponite, et l'hectorite ; le groupe des chlorites ; le groupe des vermiculites ; le groupe des argiles interstratifiées dont la structure unitaire est une combinaison des groupes précédents ; le groupe des argiles fibreuses, telles que par exemple l'attapulgite (palygorskite), la sépiolite ; ou encore le groupe formé par le carbonate de calcium (la calcite), le carbonate de magnésium, la dolomie (carbonate double de calcium et de magnésium), le sulfate de calcium dihydraté (gypse), le sulfate de baryum, le talc, l'alumine, la silice, le dioxyde de titane, la zircone.

Quand les particules pulvérulentes sont d'origine synthétique, elles peuvent être choisies dans le groupe constitué par les poudres de verre, le carbonate de calcium précipité, les poudres métalliques.

Pour créer les conditions d'une suspension stable par leur dispersion dans la phase aqueuse, lesdites particules pulvérulentes mises en oeuvre selon l'invention doivent avoir :
✔ une coupe granulométrique d'au plus 30 µm et préférentiellement d'au plus 20 µm et très préférentiellement d'au plus 5 µm.
✔ un diamètre médian d'au plus 5 µm et préférentiellement compris dans l'intervalle allant de 1 µm à 0,005 µm.

Pour affiner encore le seuil de séparation au niveau de densité "ds" choisi, il est possible de réaliser le mélange de plusieurs coupes granulométriques d'un seul composé pulvérulent tel que du carbonate de calcium, ou de plusieurs composés pulvérulents tels que du carbonate de calcium et du kaolin.

De même, pour affiner encore le seuil de séparation au niveau de densité "ds" choisi, il est possible de mettre en oeuvre des particules pulvérulentes dont les dimensions diamétrales sont majoritairement sélectionnées à l'intérieur des limites préconisées dans le cadre de l'invention, au moyen d'un tri sélectif préalable à la mise en oeuvre de la séparation.

Quand les caractéristiques dimensionnelles des particules pulvérulentes sont au-delà des valeurs limites précédemment énoncées, c'est à dire lorsque les particules pulvérulentes ont une coupe granulométrique supérieure à 30 µm, il apparaît manifeste que les suspensions séparatives denses obtenues par leur dispersion dans la phase aqueuse conduisent à des phénomènes de sédimentation, d'instabilité des caractéristiques et de déviation du seuil "ds" ciblé, pour assurer la séparation fine souhaitée des matériaux organiques de synthèse usagés.

Par ailleurs, la présence des particules pulvérulentes les plus fines, c'est à dire de coupe granulométrique inférieure à 5 µm, en suspension dans la phase aqueuse, sont absolument indispensables à l'objet de l'invention car elles équilibrent et stabilisent les particules de taille plus élevée d'au plus 30 µm, présente dans ladite suspension.

Ainsi, l'objet de l'invention dispose de particules pulvérulentes en suspension dans la phase aqueuse présentant une distribution de coupe granulométrique complète, c'est à dire d'une coupe granulométrique allant de 0 à 30 µm, ce qui permet aux particules les plus fines de coupe granulométrique de 0 à 5 µm, de se placer dans les espaces vides laissés entre les particules les plus grosses de coupe granulométrique de 5 à 30 µm et de renforcer ainsi la stabilité et l'équilibre de ladite suspension, et ce, en combinaison avec les autres moyens participant à l'objet de l'invention.

La quantité pondérale des particules pulvérulentes dispersées dans la phase aqueuse est dépendante du seuil de densité "ds" choisi pour réaliser la séparation fine d'un type de matériaux polymères usagé de densité généralement supérieure à 1, à partir d'un mélange de matériaux usagés le contenant.

Pour séparer, par exemple, du polystyrène (PS) non chargé dont la densité est de 1,05, d'un copolymère d'acrylonitrile-butadiène-styrène (ABS) non chargé de densité 1,07, la quantité de particules pulvérulentes (CaCO₃ broyé) est de 99 g par litre de phase aqueuse pour créer un milieu de densité séparative fine de ces deux matériaux, qui a une densité "ds" exactement égale à 1,06.

Selon le procédé de l'invention, la phase aqueuse est choisie parmi les eaux dont la conductivité est préférentiellement d'au plus 50 ms, plus préférentiellement choisie parmi les eaux ayant une conductivité comprise entre 0,2 ms et 40 ms, étant entendu que l'unité de mesure en matière de conductivité est le SIEMENS et que les mesures des eaux mises en oeuvre se manifestent être à l'échelle de 10⁻³ Siemens, c'est-à-dire le millisiemens représenté par ms.

Le milieu aqueux mis en oeuvre peut être choisi dans le groupe constitué par des eaux aussi diverses que les eaux de source, les eaux alimentaires, les eaux industrielles traitées ou non, tournant en circuit fermé ou non, de l'eau de mer, sachant que la stabilité de la suspension est acquise au niveau de la densité seuil « ds » choisie pour effectuer une séparation fine quand les deux critères qui sont le dimensionnement des particules pulvérulentes dispersées dans la phase aqueuse et la mise en oeuvre d'un moyen dynamique de stabilisation de la suspension sont réunis.

Selon l'invention, la stabilisation dynamique des caractéristiques rhéologiques et d'invariance de la densité « ds » seuil choisie à un niveau de précision de "ds ± 0,0005" des suspensions séparatives :
- formées des particules pulvérulentes de dimensions sélectionnées c'est-à-dire de coupe granulométrique d'au plus 30 µm, préférentiellement d'au plus 20 µm, et très préférentiellement d'au plus 5 µm,
- ces particules solides pulvérulentes ainsi sélectivement dimensionnées étant dispersées et présentes dans la phase aqueuse en quantité suffisante pour atteindre le seuil de densité "ds" choisi, est obtenue par un moyen dynamique de stabilisation pour rendre lesdites suspensions séparatives stables et invariantes en densité à un niveau de densité "ds" choisi comme seuil de séparation des divers matériaux organiques de synthèse fragmentés à séparer sélectivement par type.

Ce moyen dynamique de stabilisation est choisi dans le groupe constitué par une agitation au moyen d'un mobile d'agitation , par une recirculation interne de la suspension au moyen du mobile d'agitation, par une recirculation externe de la suspension au moyen d'une pompe par prélèvement de la suspension dans le fond du conteneur où elle se trouve et par réinjection dans la partie supérieure dudit conteneur, ou par la combinaison des moyens permettant d'associer agitation au moyen d'un mobile d'agitation et recirculation interne et/ou externe de la suspension.

La re-circulation externe de la suspension au moyen d'une pompe qui est d'homogénéisation, et/ou la recirculation interne au moyen d'un mobile d'agitation de la suspension stabilisée en son sein, est telle qu'elle ne provoque pas de phénomènes visibles d'agitation, la suspension stable de particules pulvérulentes dispersées dans la phase aqueuse ayant un aspect apparent statique pour ne pas perturber la séparation par densité des flux flottants et décantant des matériaux polymères fragmentés en cours de séparation.

Les conditions de la stabilisation dynamique de la suspension séparative, selon l'invention, sont telles que le débit circulant de la suspension déplacée par l'un et/ou l'autre moyen pour stabiliser la suspension peut varier en fonction de la quantité de particules pulvérulentes dispersées dans la phase aqueuse. Ce débit est au plus de 40 m³/h, et généralement compris entre 10 et 30 m³/h, et préférentiellement compris entre 5 et 15 m³/h.

En effet, le contrôle et la maîtrise du débit à une valeur faible d'au plus 40 m³/h est indispensable, car au-delà d'une telle limite, la suspension dense ne peut plus jouer son rôle de séparateur, ladite suspension devenant un entraîneur mécanique des fragments de polymères à séparer.

Ainsi, le contrôle et la maîtrise du débit à une valeur faible d'au plus 40 m³/h est nécessaire pour maintenir le seuil de densité "ds" à la valeur choisie et à un niveau de précision de ±0,0005.

Il est important de noter que la recirculation de la suspension peut être pratiquée de manière continue ou de manière discontinue, c'est à dire de manière séquentielle: par exemple, des cycles de circulation de 20s et des cycles d'arrêt de 20s se succédant.

Le débit circulant de la suspension séparative est réglé sur un taux de renouvellement horaire de ladite suspension qui varie généralement de 0,5 à 4 et préférentiellement de 0,5 à 2.

L'homme du métier est à même de pouvoir définir le débit nécessaire pour homogénéiser et maintenir dans cet état homogène la suspension aqueuse de particules pulvérulentes de façon à ce que cette suspension soit stable au niveau de densité « ds » choisie comme seuil de séparation des critères matériaux organiques de synthèse fragmentés, à séparer sélectivement par type. Par exemple, lorsque le pourcentage en poids de matière sèche de particules pulvérulentes d'une suspension aqueuse de l'invention est compris entre 7,60% et 26,56%, le débit pompe d'homogénéisation à l'origine de l'agitation mécanique peut être de l'ordre de 2 m³/h.

Eventuellement et selon le procédé de l'invention, un agent hydrosoluble d'aide au moyen de stabilisation dynamique des caractéristiques rhéologiques et d'invariance de la densité apparente "ds" à un niveau de précision de ±0,0005 par rapport à ladite densité "ds" de la suspension de particules solides pulvérulentes, et de renforcement de ces caractéristiques, peut être mis en oeuvre dans lesdites suspensions de particules pulvérulentes dispersées initialement stabilisées par un moyen dynamique de stabilisation.

Cet agent hydrosoluble peut être choisi dans le groupe constitué par des agents hydrosolubles de stabilisation connus tels que par exemple les phosphates et polyphosphates, les esters alkylphosphates, alkylphosphonate, alkylsulphate, alkylsulfonate qui provoquent une défloculation des argiles colloïdales et permettant l'usage d'une suspension de forte densité et de faible viscosité, la lignine, les lignosulfonates sous forme de sels de calcium, de sodium, de fer, de chrome, de fer et de chrome, les copolymères d'anhydride maléique et d'acide styrène sulfonique, les copolymères de méthylacrylamide et d'acide (méthyl) acrylique substitués, neutralisés, estérifiés ou non, les copolymères, d'acide méthylacrylamido-alkyl sulfonique et de (méthyl)acrylamide, les polymères hydrosolubles d'acide acrylique mis en oeuvre sous la forme acide ou, éventuellement, neutralisé en tout ou en partie par des agents alcalin et/ou alcalino-terreux, par les amines et/ou salifiées par des ions monovalents et/ou polyvalents, et/ou estérifiées ou encore parmi les copolymères acryliques, hydrosolubles disposant d'un motif phosphaté, phosphoné, sulfaté, sulfoné, des copolymères acryliques hydrosolubles, dont certains seulement sont connus, répondant à la formule générale : 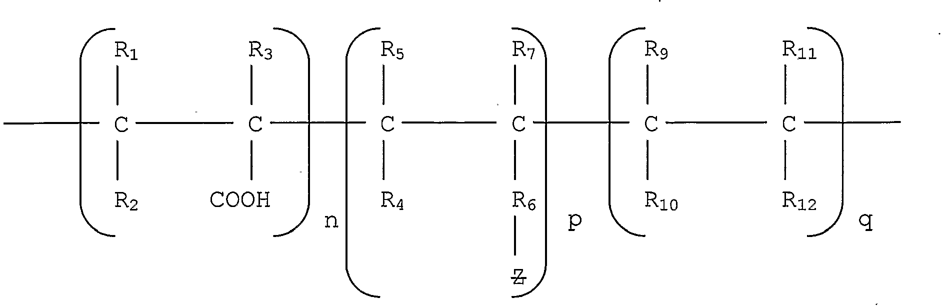 dans laquelle :
✔ 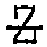 est un motif de type phosphate, phosphonate, sulfate, sulfonate, ayant au moins une fonction acide libre, toute autre fonction acide pouvant être occupée par un cation, un groupement ammonium, une amine, un alkyle en C₁ à C₃, un aryle en C₃ à C₆ substitué ou non, un alkylaryle, un ester en C₁ à C₁₂ de préférence en C₁ à C₃, ou un amide substitué.
✔ n prend une valeur comprise entre 0 et 95,
✔ prend une valeur comprise entre 95 et 5,
✔ q prend une valeur comprise entre 0 et 95,
✔ le cumul de n+p+q étant égal à 100, sachant que n et q peuvent être séparément nuls,
✔ R₁ et R₂ peuvent être simultanément de l'hydrogène ou encore pendant que l'un est de l'hydrogène, l'autre peut être une fonction carboxylique estérifiée ou non par un alcool en C₁ à C₁₂ et de préférence en C₁ à C₄,
✔ R₃ peut être de l'hydrogène ou un radical alkyl en C₁ à C₁₂ et de préférence en C₁ à C₄,
✔ R₄ et R₅ peuvent être, simultanément ou non, de l'hydrogène ou un radical alkyl en C₁ à C₁₂, de préférence en C₁ à C₄, un aryle substitué ou non, une fonction carboxylique estérifiée ou non par un alcool en C₁ à C₁₂ et préférentiell ement en C₁ à C₄,
✔ R₆ est un radical, qui établit le lien entre le motif 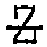 et la chaîne polymérique, ce radical R₆ pouvant être un alkylène de formule (̵CH₂)̵ᵣ dans laquelle r peut prendre les valeurs de l'intervalle 1 à 12, un oxyde ou polyoxyde d'alkylène de formule (̵R₈-O)̵ₛ dans laquelle R₈ est un alkylène en C₁ à C₄ et s peut prendre les valeurs de 1 à 30, ou encore une combinaison des deux formules (̵CH₂)̵ᵣ et (̵R₈-O)̵ₛ,
✔ R₇ peut être de l'hydrogène ou un radical alkyl en C₁ à C₁₂, préférentiellement en C₁ à C₄,
✔ R₉ et R₁₀ peuvent être simultanément de l'hydrogène, ou encore pendant que l'un est de l'hydrogène, l'autre est un groupement carboxylique, un ester en en C₁ à C₁₂, préférentiellement en C₁ à C₃, un alkyle en C₁ à C₁₂, préférentiellement en C₁ à C₃, un aryle en C₅ ou C₆ ou un alkylaryle,
✔ R₁₁ peut être de l'hydrogène, un groupement carboxylique, un alkyle en C₁ à C₃ ou un halogène,
✔ R₁₂ peut être un ester en C₁ à C₁₂, de préférence en C₁ à C₅, un amide substitué ou non, un alkyl en C₁ à C₁₂, de préférence en C₁ à C₃, un aryle en C₅ ou C₆, un alkylaryle, un halogène, un groupement carboxylique ou encore un groupement alkyle ou aryle, phosphaté, phosphoré, sulfaté, sulfané.

La quantité pondérale de l'agent hydrosoluble de stabilisation s'exprime en % en poids sec/sec dudit agent par rapport à la quantité pondérale de particules pulvérulentes mises en suspension. Cette quantité pondérale dudit agent est comprise entre 0,02% et 5%, et préférentiellement entre 0,1% et 2% en sec/sec par rapport à la quantité pondérale des particules pulvérulentes.

L'agent hydrosoluble de stabilisation est un copolymère dont la masse moléculaire est généralement comprise entre 5000 et 100 000.

L'agent hydrosoluble de stabilisation se présente sous l'aspect d'une solution aqueuse du copolymère qui peut être ou non neutralisé, partiellement ou totalement, au moyen d'un agent de neutralisation choisi, par exemple, dans le groupe constitué, par exemple, par les hydroxydes de sodium, de potassium, d'ammonium, de calcium, de magnésium, de zinc, d'aluminium et les amines primaires, secondaires ou tertiaires, aliphatiques et/ou cycliques, telles que les mono, di, tri éthanolamines, les mono et diéthylamines, la cyclohexylamine, la méthylcyclohexylamine.

Dès lors, la stabilité de la suspension séparative est acquise au niveau de la densité seuil "ds" choisie pour effectuer une séparation fine quand les trois critères de dimensionnement des particules (a), de la phase aqueuse de conductivité au plus égale à 15 ms (b), et du moyen de stabilisation dynamique (c), sont réunis.

Selon l'invention, la préparation des suspensions stables de particules pulvérulentes dispersées en quantité adéquate dans une phase aqueuse pour créer un niveau de densité "ds" précis choisi comme seuil de séparation des divers matériaux organiques de synthèse usagés fragmentés à séparer sélectivement, grâce à la précision de la densité du milieu de séparation, se fait sous agitation par l'introduction contrôlée des particules pulvérulentes en quantité déterminée pour parvenir au seuil de densité souhaité.

Les suspensions stables de particules pulvérulentes selon l'invention,
- permettant la séparation fine et sélective de divers matériaux organiques de synthèse constitutifs d'un mélange à trier,
- dont la sensibilité au tri d'un matériau à un autre peut atteindre un différentiel Δ=|0,001|
- permettant de séparer avec efficacité des matériaux polymères en particulier usagés à séparer dont les densités se trouvent dispersées dans un intervalle allant de 1,000 à 1,600.

Toutefois, dans le cas de matériaux polymères en particulier usagés de densité rigoureusement identique mais de nature chimique différente, d'autres moyens de séparation opérant sur d'autres caractéristiques desdits matériaux ou d'autres comportements physico-chimiques sont à mettre en oeuvre pour achever ladite séparation sélective.

Selon l'invention, le procédé est mis en oeuvre dans une installation industrielle comportant au moins un séparateur hydraulique muni d'au moins un moyen de stabilisation dynamique.

Par séparateur hydraulique, on entend définir des séparateurs dont la phase aqueuse est apparemment statique ou est un flux à très faible vélocité, pouvant être laminaire.
Dans le cas où l'installation industrielle comporte un seul séparateur hydraulique, il est possible de faire évoluer la densité "ds" choisie :
- dans le sens croissant, par ajout contrôlé des particules pulvérulentes définies et sélectionnées dans la suspension présente dans le séparateur hydraulique, jusqu'à atteindre la nouvelle densité "ds" seuil choisie
- dans le sens décroissant par ajout d'eau jusqu'à atteindre la nouvelle densité "ds" seuil choisie.

L'évolution de la densité de la suspension stable séparative, dans un sens croissant ou décroissant, s'effectue sous une agitation au moyen d'un mobile d'agitation et/ou d'une recirculation interne du milieu aqueux et/ou d'une recirculation du milieu dense par prélèvement dans le fond du séparateur hydraulique et réinjection au sommet dudit séparateur du milieu aqueux dense, en cours de correction et après correction.

Dans le cas où l'installation industrielle comporte plusieurs séparateurs hydrauliques, les divers séparateurs sont placés les uns à la suite des autres, selon un système en cascade fonctionnant avec des suspensions stables ayant chacune un seuil de densité "ds" précis, dans un ordre croissant ou décroissant des densités.

Dans la conduite du procédé selon l'invention, la densité seuil "ds" de la suspension aqueuse de séparation fine est contrôlée en continu par des moyens de mesure appropriés et soumise à correction dès lors qu'une dérive est perçue.

Pour ce faire, chaque séparateur hydraulique est piloté quant à la densité du milieu dense qu'il contient au moyen de deux électrovannes s'ouvrant chacune sur deux circuits connectés à deux réservoirs. L'un des réservoirs contient une suspension « mère » concentrée à environ 60% en particules pulvérulentes, maintenue sous agitation, et/ou stabilisée par un agent hydrosoluble de stabilisation, permettant d'introduire une quantité déterminée de la suspension mère qui corrige vers le haut toute dérive vers un abaissement de la densité du milieu dense de séparation fine.

L'autre réservoir contient de l'eau permettant d'introduire une quantité déterminée qui corrige vers le bas toute dérive vers une augmentation de la densité du milieu dense de séparation fine.

La mesure de la densité du milieu dense de chaque séparateur hydraulique se fait en continu par des appareils de mesure adaptés qui déclenchent l'ouverture de l'une ou l'autre des électrovannes puis la fermeture dès lors que le niveau de densité seuil "ds" est atteint.

La conduite du procédé et la récupération des flux séparés se font alors qu'une stabilisation dynamique de chaque suspension de séparation sélective est réalisée dans chaque séparateur hydraulique par l'un et/ou l'autre des moyens de stabilisation que sont l'agitation au moyen d'un mobile d'agitation, par une recirculation interne de la suspension au moyen d'un mobile d'agitation, par une recirculation externe de la suspension par prélèvement de ladite suspension au fond dudit séparateur et réinjection dans la partie supérieure.

Les séparateurs hydrauliques ont des capacités de séparation de l'ordre de 1 à 10 tonnes à l'heure et opèrent en continu. Ils peuvent toutefois opérer par campagne, permettant alors de changer les valeurs des densités de coupure et de ne pas avoir impérativement besoin d'une cascade de plus de 3 ou 4 séparateurs hydrauliques. Dans ce cas, le milieu dense est fabriqué sur mesure pour chaque séparateur au regard de la campagne de séparation à mener.

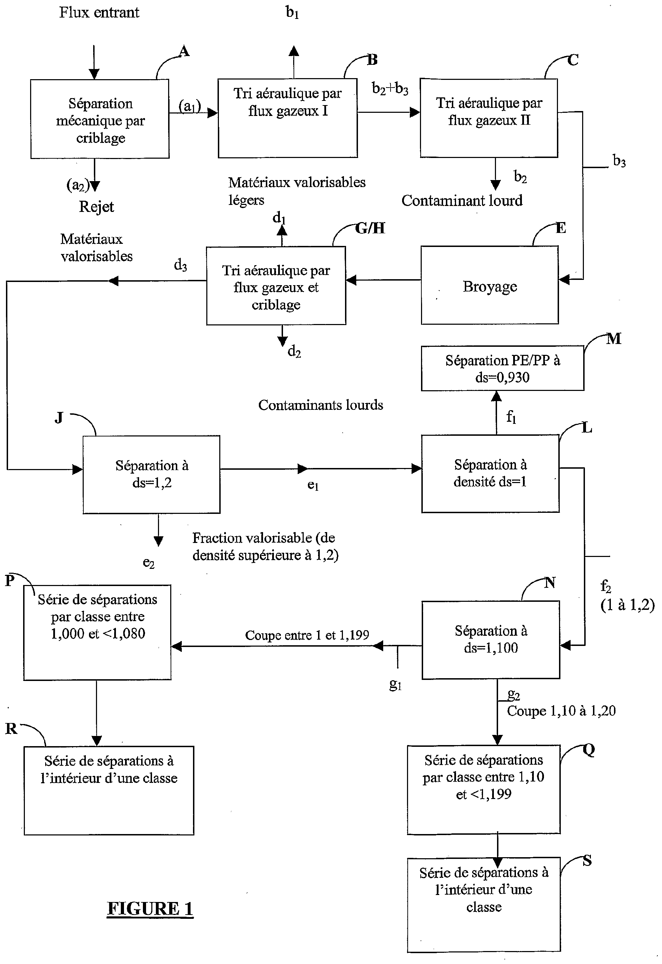

### Exemple 1 : (conforme à la figure 1)

Sur un site de broyage industriel de matériels électroménagers en fin de vie et après la séparation de la majeure partie des divers métaux à récupérer, un flux de 21,88 tonnes de matériaux valorisables issus de cette séparation formé d'un mélange de polymères de synthèse usagés à valoriser et de matériaux contaminants à éliminer est soumis à une phase de préconcentration afin de sélectionner dans ce mélange de matériaux polymères usagés à valoriser les matériaux polymères usagés à valoriser appartenant à l'intervalle de densité allant de 1,000 à 1,400 à traiter selon l'invention, la borne inférieure étant incluse, la borne supérieure étant exclue.

La composition du flux de matériaux entrant dans la phase de préconcentration est donnée dans le tableau I ci-après.

**Tableau I :**

| **Matériaux** | **Composition et granulométrie** | **Teneur en % en poids** |
|---|---|---|
| **Polymères** | PE, PP, PS, ABS, PP Talc, PVC,... sous forme fragmentée | 73% en poids |
| **Caoutchouc et/ou élastomères** | Tous types de joints et/ou de gainages isolants de câbles électriques | 19% en poids |
| **Métaux** | Fragments de métaux ferreux mais surtout non ferreux : cuivre, aluminium... | 8% en poids |

La préconcentration est effectuée sur le flux précité, et consiste à traiter le mélange des matériaux issus de broyage se présentant sous une forme fragmentée, pour en éliminer au moins pour partie les matériaux contaminant les matériaux valorisables. Ledit mélange à traiter comprenant :
✔ Une fraction de matériaux valorisables, qui sont des matériaux polymères de synthèse non expansés, de nature et/ou de compositions et/ou de facteurs de forme multiples, se présentant sous l'aspect de fragments allant d'un état rigide à un état souple,
✔ Des fractions de matériaux contaminants formés de matériaux métalliques et/ou de matériaux organiques autres que les matériaux polymères non expansés et/ou des matériaux polymères de synthèse dans un état expansé, comporte les étapes suivantes de traitement :
   a) Une première étape de séparation mécanique en (A) par criblage et/ou facteur de forme pour extraire au moins pour partie du mélange des matériaux fragmentés, la fraction des matériaux contaminants. Les mailles de crible étaient de 0-4 mm et on a retiré 0,02 tonnes de matériaux contaminants représentant 0,09% en poids du flux entrant.
   b) Une étape de séparation aéraulique, par flux gazeux, comportant une entrée du mélange de matériaux provenant de l'étape a) et trois sorties pour l'extraction de fractions de matériaux séparés dont la première fraction (b₁) consiste en une fraction de matériaux polymères de synthèse ultra légers et/ou expansés, la deuxième fraction (b₂) consiste en une fraction de matériaux lourds présents dans le mélange et la troisième fraction (b₃) consiste en une fraction des matériaux polymères de synthèse à valoriser se présentant sous une forme fragmentée allant d'un état rigide à un état souple. Pour ce faire, le flux de matériaux provenant de l'étape a), débarrassé au moins pour partie de la fraction des matériaux contaminants, a été soumise à une séparation par tri aéraulique dans deux séparateurs (B) et (C) couplés.
      Dans le premier séparateur aéraulique (B), la fraction (b₁) représentant 0,48 tonnes de matériaux dits légers a été traitée par aspiration et les fractions b₂ et b₃ extraites par le fond du séparateur aéraulique (B) et représentant 21,38 tonnes de matériaux dits lourds ont été recueillies pour être traitées dans le séparateur aéraulique (C). La fraction (b₁) représente 2,19% en poids de légers éliminés.
      Le mélange des fractions (b₂) + (b3) représente 97,71% en poids de matériaux lourds.
      Le mélange des fractions (b₂) et (b₃) représentant 21,38 tonnes a été introduit dans le deuxième séparateur de tri aéraulique (C). La fraction (b₂) constituée de matériaux contaminants tels que des métaux, représentant une masse de 5,2 tonnes, est extraite par le fond du séparateur aéraulique (C).
      La fraction (b₃), également extraite du séparateur (C), constituée des matériaux polymères valorisables représente une masse de 16,18 tonnes, soit 73,95% en poids par rapport à la masse du flux introduit à préconcentrer.
   c) Une étape de broyage de la fraction (b₃) des matériaux polymères à valoriser provenant de l'étape b), à la maille de libération des matériaux contaminants inclus, adhérant ou assemblés aux fragments de la fraction des matériaux polymères à valoriser. Cette étape de broyage est effectuée dans la zone (E), le broyage se pratiquant sur une grille de 25 mm.
   d) Une seconde étape de séparation aéraulique par flux gazeux dans la zone (G/H) de la fraction des matériaux polymères de synthèse à valoriser provenant de l'étape c) de broyage pour en éliminer au moins pour partie la fraction des matériaux contaminants libérés lors du broyage et en extraire la fraction des matériaux valorisables constituant le mélange souhaité, pré-concentré en matériaux valorisables, contenant encore des contaminants. Cette zone de séparation aéraulique, qui comporte non seulement une séparation par flux gazeux mais également un moyen de criblage est formée par un dispositif de séparation modulaire commercialisé par la société WESTRUP par exemple.

De cette zone (G/H) de séparation aéraulique et de criblage :
✔ Une fraction (d₃) représentant 15,8 tonnes de matériaux polymères de synthèse valorisables, essentiellement des thermoplastiques et un peu de thermodurcissables, a été extraite sous forme de paillettes, de plaquettes et autres broyats représentant 72,2% en poids de la masse totale du flux entrant dans la préconcentration,
✔ Une fraction (d₂) représentant 0,06 tonnes de matériaux contaminants lourds formée de métaux et de morceaux de fils électriques a été éliminée par criblage, représentant 0,27% en poids de la masse totale du flux entrant dans la préconcentration,
✔ Une fraction (d₁) représentant 0,32 tonnes de matériaux également valorisables a été séparée par aspiration comprenant des mousses résiduelles de polymères, des caoutchoucs fins, des matériaux polymères thermoplastiques et thermodurcissables, sous forme de poudre de paillettes, de plaquettes, représentant 1,46% en poids de la masse totale du flux entrant dans la préconcentration,

La fraction d₃, mélange de polymères de synthèse usagés valorisables sortant de l'étape d) mais de densités éminemment variables comprises dans un intervalle de 0,900 à 1,400 est soumise à un traitement de séparation par densité en milieu aqueux, dans la zone (J), à un seuil de densité ds ≥ 1,2 pour effectuer une première sélection par densité.

Cette séparation est réalisée par flottation au seuil de densité choisi 1,2 dans un milieu dense formé d'une suspension aqueuse de CaCO₃ pulvérulent dispersé dans la phase aqueuse et stabilisée à la valeur ds=1,2 au moyen d'une recirculation de la suspension, prélevée au fond du séparateur et réinjectée près de la surface à raison d'un débit de recirculation de 15m³/h.

Le milieu dense de séparation comporte :
✔ une phase aqueuse ayant une conductivité de 5,9 ms et un pH de 7,42
✔ du carbonate de calcium pulvérulent dont la dimension diamétrale médiane est de 1 µm et dont la coupe granulométrique est de 5 µm (OMYALITE 90 commercialisée par la société OMYA), à raison de 362g/litre
✔ la stabilisation de la suspension séparative est acquise par une recirculation de la suspension de carbonate de calcium à raison de 15 m³/h, la capacité utile du séparateur hydraulique étant de 5 m³.

Cette séparation au seuil de densité ds=1,2 conduit à l'obtention de deux fractions :
✔ une première fraction e₁ de densité inférieure à 1,2, représentant 14,52 tonnes de matériaux valorisables (66,36% en poids du flux entrant), contenant en particulier les polyéthylène (PE), polypropylène (PP), polystyrène choc et/ou cristal ignifugé ou non (PS), copolymère acrylonitrile-butadiène-styrène (ABS) ignifugé ou non, polypropylène chargé de 5% à 40% en poids de talc, et autres matériaux polymères et
✔ une autre fraction e₂ de densité supérieure ou égale à 1,2, représentant 1,28 tonnes de matériaux valorisables (5,85% en poids du flux entrant), se présentant sous la forme d'un mélange comprenant du chlorure de polyvinyle, du polyester insaturé chargé, les polyuréthanes chargés ou autres.

La fraction e₁, mélange de polymères usagés à valoriser sortant de l'étape (J), est soumise à un traitement de séparation par densité en milieu aqueux, dans la zone (L), au seuil de densité ds=1,000, pour en extraire un flux surnageant (f₁) qui est un mélange de (PE) et (PP) et un flux coulant (f₂) comprenant les autres polymères usagés à valoriser.
Le flux surnageant (f₁), qui représente 3,398 T [23,40% en poids de la fraction (e₁)], est soumis à un traitement de séparation par densité en un milieu hydro-alcoolique (eau et isopropanol) au seuil de densité précis ds=0,930 permettant de récupérer :
- la totalité du polypropylène présent (2,140 T) qui surnage, représentant 14,74% en poids de la fraction e₁
- la totalité du polyéthylène présent(1,257 T) qui coule, représentant 8,66% en poids de la fraction e₁,
ces deux matériaux polymères usagés, finement séparés, étant directement valorisables sous la forme de granulés obtenus par leur extension.

Le flux coulant (f₂) qui représente 11,122 T [76,60% en poids de la fraction (e₁)], formé d'un mélange de polystyrène cristal et/ou choc ignifugé ou non, sans charge, d'un copolymère d'acrylonitrile-butadiène-styrène non chargé mais pour certaines fractions ignifugé et de polypropylène chargé de talc de 5% à 40% constitue la fraction des matériaux polymères usagés, dont les densités sont comprises dans l'intervalle 1,000 à 1,199, bornes comprises, et qui sont à séparer selon l'invention.

La fraction f₂, mélange de polymères de synthèse usagés valorisables sortant du séparateur (L) est soumise à un traitement de séparation par densité en milieu aqueux, dans la zone (N), à un seuil de densité "ds"=1,100.

Cette séparation est réalisée par densité au seuil de densité choisi 1,100 dans un milieu dense formé d'une suspension aqueuse de CaCO₃ pulvérulent dispersé dans la phase aqueuse et stabilisée à la valeur ds=1,100 au moyen d'une recirculation de la suspension par pompe à raison de 15 m³/h.

Le milieu dense de séparation comporte :
✔ une phase aqueuse ayant une conductivité de 5,9 ms et un pH de 7,42
✔ du carbonate de calcium pulvérulent dont la dimension diamétrale médiane est de 1 µm et dont la coupe granulométrique est de 5 µm (OMYALITE 90 commercialisée par la société OMYA), à raison de 187.7g/litre
et est stabilisé par la recirculation de la suspension par son prélèvement au fond du séparateur et sa réinjection hydraulique proche de la surface et ce, à raison d'un débit de recirculation de 15 m³/h.

Cette séparation au seuil de densité ds=1,100 conduit à l'obtention de deux fractions :
✔ une première fraction g₁ de densité inférieure à 1,100, représentant 10,742 tonnes de matériaux valorisables (49,19% en poids du flux entrant), contenant en particulier du polystyrène (PS), copolymère acrylonitrile-butadiène-styrène (ABS), polypropylène chargé talc, et autres matériaux polymères et
✔ une autre fraction g₂ de densité supérieure ou égale à 1,100, représentant 0,38 tonnes de matériaux valorisables (1,74% en poids du flux entrant), se présentant sous la forme d'un mélange comprenant du polycarbonate (PC), du polypropylène (PP) chargé talc (30 à 40% de talc), du chlorure de polyvinyl (PVC), des polyméthylméthacrylate (PMMA), des polyuréthanes (PU) chargés, ou autres.

Le flux g₁ est en fait formé :
- d'un mélange de polystyrènes cristal ou choc, traités ou non pour les rendre ignifugés et/ou adjuvantés au moyen de divers agents connus. C'est pourquoi l'intervalle des densités de ces divers polystyrènes est compris entre 1,000 et 1,080.
- d'un mélange copolymères acrylonitrile-butadiène-styrène, dont la densité vraie est déterminée par les quantités relatives des trois monomères mis en oeuvre, par des adjuventations éventuelles et par les traitements d'ignifugation expliquant l'intervalle des densités de ces divers ABS qui est compris entre 1,000 et également 1,080.
- d'un mélange de polypropylène chargé en talc dont la teneur en % en poids de talc peut évoluer de 5% à 20%. C'est pourquoi, l'intervalle de densité du polypropylène chargé talc est aussi compris entre 1,000 et 1,080.

Ce flux g₁ est, dès lors, soumis à une séparation dans la zone (P) par classe de densité croissante au moyen d'un milieu dense de séparation se composant :
- d'une phase aqueuse ayant une conductivité de 5,7 ms et un pH de 7,53,
- de carbonate de calcium pulvérulent de dimension diamétrale médiane de 1 µm et dont la coupe granulométrique est de 5 µm (OMYALITE 90 commercialisée par la société OMYA) dont les quantités pondérales pour chaque densité sont exprimées dans le tableau II suivant,
- du moyen dynamique de stabilisation par recirculation d'un volume de suspension, à raison d'un débit de 15 m³/h.

Pour ce faire et dans chaque classe de densité connue représentée dans le tableau II, la phase surnageante est récupérée et analysée, et la phase plongeante est recueillie puis soumise à une densité supérieure à la précédente en donnant pour chaque classe une phase surnageante analysée et une phase plongeante soumise à son tour à une densité supérieure.

**Tableau II : Traitement du flux g1**

| **Densité ds établie comme seuil de séparation** | **CaCO₃ en g/l pulvérulent pour créer ds** | **Limites de chaque classe de densité** | **Moyen de stabilisation: débit en m³/h** | **% en poids dans chaque classe** | | |
|---|---|---|---|---|---|---|
| | | | | ***De PS*** | ***d*'*ABS*** | **de PP *talc*** |
| 1,020 | 32,30 | [1,000 à 1,020[ | 15 | 1,10% | 0,30% | 5,15% |
| 1,042 | 68,75 | [1,020 à 1,042[ | 15 | 22,00% | 0,10% | 16,40% |
| 1,050 | 82,20 | [1,042 à 1,050[ | 15 | 36,20% | 1,30% | 18,50% |
| 1,053 | 87,30 | [1,050 à 1,053[ | 15 | 10,20% | 3,10% | 7,95% |
| 1,055 | 90,70 | [1,053 à 1,055[ | 15 | 8,10% | 5,40% | 2,90% |
| 1,058 | 95,80 | [1,055 à 1,058[ | 15 | 3,50% | 6,50% | 5,50% |
| 1,060 | 99,20 | [1,058 à 1,060[ | 15 | 9,30% | 14,60% | 7,60% |
| 1,065 | 107,80 | [1,060 à 1,065[ | 15 | 6,10% | 17,30% | 9,10% |
| 1,070 | 116,50 | [1,065 à 1,070[ | 15 | 2,50% | 25,60% | 9,00% |
| 1,080 | 134,00 | [1,070 à 1,080[ | 15 | 1,00% | 24,60% | 17,50% |
| 1,090 | 151,70 | [1,080 à 1,090[ | 15 | 0% | 1,10% | 0,30% |
| 1,100 | 169,50 | [1,090 à 1,100[ | 15 | 0% | 0,10% | 0,10% |
| *TOTAL* | | | | 100,00% | 100,00% | 100,00% |

Des quantités de CaCO₃ mises en oeuvre dans chaque classe de densité sont déterminées par la mesure de la densité et peuvent varier selon la pureté du CaCO₃ mis en oeuvre.

Comme le tableau II le montre,
- le PS est majoritairement présent dans l'intervalle de densité [1,020-1,055[, constituant un premier groupe relatif au PS cristal, mais un deuxième groupe de densité se manifeste dans l'intervalle [1,055-1,070[ qui est relatif au PS choc, sans omettre que certains PS présents sont vraisemblablement ignifugés. Ces diverses classes de densité sont statistiquement justifiées par la présence de plusieurs familles de PS dans ce polymère usagé à valoriser.
- L'ABS est également distribué dans plusieurs classes de densité, mais sa présence est majoritaire dans l'intervalle de densité [1,058-1,080[. Dans le cas de l'ABS, il apparaît également une distribution large des densités en raison de la présence de plusieurs types d'ABS dont les compositions peuvent varier par les quantités relatives de leurs monomères et également par la présence d'agents d'ignifugation.
- Le PP talc est aussi distribué dans plusieurs classes par des variations importantes de densité en raison de la présence de la charge de talc qui peut varier de 5% en poids à 20% en poids.

Pour réaliser la séparation effective du PS, de l'ABS et du PP talc présents dans une même classe de densité, le mélange des matériaux polymères usagés à valoriser extrait de chaque classe de densité du tableau II, est soumis à une nouvelle séparation par densité croissante ou décroissante dans la zone de séparation (R) au moyen d'un milieu dense de séparation se composant :
- D'une phase aqueuse ayant une conductivité de 6,8 ms et un pH de 8,1,
- De carbonate de calcium pulvérulent de dimension diamétrale médiane de 1 µm et dont la coupe granulométrique est de 5 µm (OMYALITE 90® commercialisée par la société OMYA) et dont les quantités pondérales sont exprimées dans le tableau III suivant,
- Du moyen dynamique de stabilisation par recirculation d'un volume de suspension, à raison d'un débit de 15m³/h.

A titre d'exemple, deux classes seulement de séparation par densité, issues du tableau II, sont sélectionnées et traitées conformément à l'invention, pour illustrer la capacité du procédé de séparation sélective pour l'établissement de suspensions séparatives stables et invariantes en densité, quand est créé le niveau de densité "ds" choisi comme seuil de séparation des divers matériaux polymères usagés à séparer, le niveau de précision de la densité pouvant atteindre en valeur absolue |0,001|, c'est-à-dire pouvant atteindre autour de la valeur "ds" choisie une précision par rapport à cette valeur "ds" de ±0,0005.

Il est toutefois rappelé que des polymères usagés de nature chimique différente mais de densité exactement identique ne sont pas séparables par le procédé de l'invention et nécessitent d'autres moyens de séparation basés sur d'autres critères.

Les deux classes de densité issues du tableau II, et traitées selon le procédé de l'invention sont les suivantes :
[1,042 à 1,050[
et [1,065 à 1,070[

Pour ce faire et dans chaque classe de densité connue représentée dans le tableau III, la phase surnageante est récupérée et analysée, et la phase plongeante est recueillie puis soumise à une densité supérieure à la précédente en donnant pour chaque classe une phase surnageante analysée et une phase plongeante soumise à son tour à une densité supérieure.

Cette séparation très sélective a donné, pour chaque classe, les résultats consignés classe par classe dans le Tableau III suivant :

**Tableau III : Traitement de deux classes de densité, issues du flux g1.**

| **Densité ds établie comme seuil de séparation** | **CaCO3 en g/l pulvérulent pour créer ds** | **Limites de chaque classe de densité** | **% en poids dans chaque classe** | | |
|---|---|---|---|---|---|
| | | | ***De PS*** | ***d'ABS*** | **de *PP talc*** |
| 1,043 | 70,40 | [1,042-1,043[ | 0 | 0 | 0,32 |
| 1,044 | 72,80 | [1,043-1,044[ | 0 | 0 | 0,35 |
| 1,045 | 74,50 | [1,044-1,045[ | 0 | 0 | 0,52 |
| 1,046 | 76,20 | [1,045-1,046[ | 0 | 0 | 0,49 |
| 1,047 | 77,20 | [1,046-1,047[ | 0 | 0 | 0,32 |
| 1,048 | 78,80 | [1,047-1,048[ | 0 | 0 | 0,55 |
| 1,049 | 80,50 | [1,048-1,049[ | 6,5 | 0 | 4 |
| 1,050 | 82,20 | [1,049-1,050[ | 15,5 | 0,1 | 9,85 |
| 1,066 | 109,60 | [1,065-1,066[ | 0,92 | 0,08 | 6,67 |
| 1,067 | 111,30 | [1,066-1,067[ | 0,75 | 0,28 | 0,85 |
| 1,068 | 113,00 | [1,067-1,068[ | 1,05 | 0,78 | 0,69 |
| 1,069 | 114,70 | [1,068-1,069[ | 2,14 | 5,8 | 0,52 |
| 1,070 | 116,50 | [1,069-1,070[ | 1,24 | 10,36 | 0,37 |

- Comme le Tableau III le révèle, le procédé selon l'invention assure une excellente maîtrise dans la séparation sélective par densité des matériaux polymères présents, la sensibilité de la densité de séparation atteignant ±0,0005 par rapport au seuil de densité choisi « ds ».
- Toutefois, des matériaux polymères de même densité mais de composition différente sont présents dans le mélange industriel initial traité dans cet exemple de telle sorte que d'autres moyens de séparation doivent être mis en oeuvre pour séparer dans chaque fraction, de polymères de densité identique, chaque type de polymère présent.

L'autre fraction g₂ de densité supérieure à 1,100 représentant 0,38 tonnes de matériaux valorisables comprenant un mélange de polycarbonate (PC), du polypropylène (PP) chargé talc, du chlorure de polyvinyle (PVC), des polyméthyl méthacrylate (PMMA), des polyuréthanes (PU) chargés, est traitée, selon le même principe que la fraction g1, dans les zones de séparation (Q) et (S), non décrites.

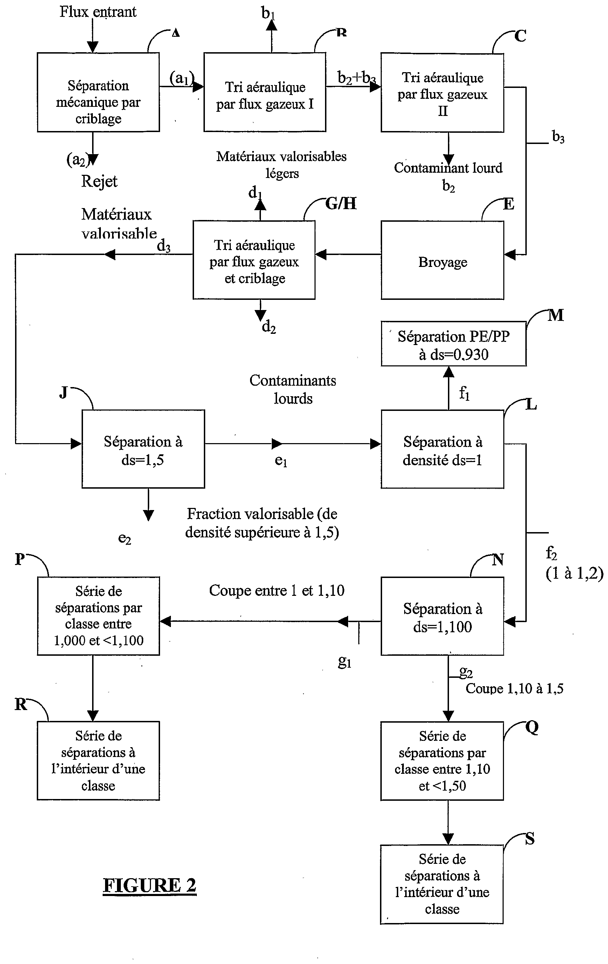

### Exemple 2: (conforme à la figure 2)

Sur un site de broyage industriel de véhicules automobiles en fin de vie et après la séparation de la majeure partie des divers métaux à récupérer, un flux de 26,820 tonnes de matériaux valorisables issus de cette séparation, formé d'un mélange de polymères de synthèse usagés à valoriser et de matériaux contaminants à éliminer est soumis à une phase de préconcentration comme décrit dans l'exemple 1 afin de sélectionner dans ce mélange de matériaux polymères usagés des matériaux polymères usagés à valoriser appartenant à l'intervalle de densité allant de 1,000 à 1,600 à traiter selon l'invention, la borne inférieure étant incluse, la borne supérieure étant exclue, afin de permettre la récupération du chlorure de polyvinyle (PVC).

La composition du flux de matériaux entrant dans la phase de préconcentration est donnée dans le tableau IV ci-après.

**Tableau IV :**

| **Matériaux** | **Composition et granulométrie** | **Teneur en % en poids** |
|---|---|---|
| **Polymères** | PE, PP, PS, ABS, PP Talc, PVC,... sous forme fragmentée | 43% en poids |
| **Caoutchouc et/ou élastomères** | Tous types de joints et/ou de gainages isolants de câbles électriques, pneumatiques, ... | 48% en poids |
| **Métaux** | Fragments de métaux ferreux mais surtout non ferreux : cuivre, aluminium... | 9% en poids |

La préconcentration est effectuée sur le flux précité, et consiste à traiter le mélange des matériaux issus de broyage se présentant sous une forme fragmentée, pour en éliminer au moins pour partie les matériaux contaminant les matériaux valorisables. Ledit mélange à traiter comprenant :
✔ Une fraction de matériaux valorisables, qui sont des matériaux polymères de synthèse non expansés, de nature et/ou de compositions et/ou de facteurs de forme multiples, se présentant sous l'aspect de fragments allant d'un état rigide à un état souple,
✔ Des fractions de matériaux contaminants formés de matériaux métalliques et/ou de matériaux organiques autres que les matériaux polymères non expansés et/ou des matériaux polymères de synthèse dans un état expansé, comporte les étapes de traitement telles que décrites dans l'exemple 1 :
   a) Une première étape de séparation mécanique en (A) par criblage et/ou facteur de forme pour extraire au moins pour partie du mélange des matériaux fragmentés, la fraction des matériaux contaminants. Les mailles de crible étaient de 0-4 mm et on a retiré 0,228 tonnes de matériaux contaminants représentant 0,85% en poids du flux entrant.
   b) Une étape de séparation aéraulique, par flux gazeux, du mélange de matériaux provenant de l'étape a) dans deux séparateurs aérauliques (B) et (C) couplés. Dans le premier séparateur aéraulique (B), la fraction (b₁) représentant 0,483 tonnes de matériaux dits légers a été traitée par aspiration et les fractions b₂ et b₃ extraites par le fond du séparateur aéraulique (B) et représentant 26,109 tonnes de matériaux dits lourds ont été recueillies pour être traitées dans le séparateur aéraulique (C). La fraction (b₁) représente 1,80% en poids de légers éliminés.
      Le mélange des fractions (b₂)+(b₃) représente 97,35% en poids de matériaux lourds.
      Le mélange des fractions (b₂) et (b₃) représentant 26,109 tonnes a été introduit dans le deuxième séparateur de tri aéraulique (C). La fraction (b₂) constituée de matériaux contaminants tels que des métaux, représentant une masse de 14,550 tonnes, est extraite par le fond du séparateur aéraulique (C), soit 54,25% de la masse entrante.
      La fraction (b₃), également extraite du séparateur (C), constituée des matériaux polymères valorisables représente une masse de 11,559 tonnes, soit 43,10% en poids par rapport à la masse du flux introduit à préconcentrer.
   c) Une étape de broyage dans la zone (E) sur grille de 25 mm de la fraction (b₃) des matériaux polymères à valoriser provenant de l'étape b), à la maille de libération des matériaux contaminants inclus, adhérant ou assemblés aux fragments de la fraction des matériaux polymères à valoriser.
   d) Une seconde étape de séparation aéraulique par flux gazeux dans la zone (G/H) de la fraction des matériaux polymères de synthèse à valoriser provenant de l'étape c) de broyage. Cette zone de séparation aéraulique comporte non seulement une séparation par flux gazeux mais également un moyen de criblage (par exemple dispositif de séparation modulaire de la société WESTRUP).

De cette zone de séparation aéraulique et de criblage (H) :
✔ Une fraction (d₁) représentant 5,900 tonnes de matériaux également valorisables a été séparée par aspiration comprenant des mousses résiduelles de polymères, des caoutchoucs fins, des matériaux polymères thermoplastiques et thermodurcissables, sous forme de poudre de paillettes, de plaquettes, représentant 22,00% en poids de la masse totale du flux entrant dans la préconcentration,
✔ Une fraction (d₂) représentant 0,122 tonnes de matériaux contaminants lourds formée de métaux et de morceaux de fils électriques, et autres, a été éliminée par criblage, représentant 0,46% en poids de la masse totale du flux entrant dans la préconcentration,
✔ Une fraction (d₃) représentant 5,537 tonnes de matériaux polymères de synthèse valorisables, essentiellement des thermoplastiques et un peu de thermodurcissables, a été extraite sous forme de paillettes, de plaquettes et autres broyats représentant 20,65% en poids de la masse totale du flux entrant dans la préconcentration,

La fraction d₃, mélange de polymères de synthèse usagés valorisables sortant de l'étape d) mais de densités éminemment variables comprises dans un intervalle de 0,900 à 1,600 est soumise à un traitement de séparation par densité en milieu aqueux, dans la zone (J), à un seuil de densité ds ≥ 1,500 pour effectuer une première sélection par densité.

Cette séparation est réalisée par densité au seuil de densité choisi 1,500 dans un milieu dense formé d'une suspension aqueuse de CaCO₃ pulvérulent dispersé dans la phase aqueuse et stabilisée à la valeur ds=1,5 par une recirculation de ladite suspension aqueuse à raison de 15 m³/h, la capacité utile du séparateur hydraulique étant de 5 m³.

Le milieu dense de séparation se compose :
✔ D'une phase aqueuse ayant une conductivité de 6,0 ms et un pH de 7,50,
✔ De carbonate de calcium pulvérulent dont la dimension diamétrale médiane est de 1 µm et dont la coupe granulométrique est de 5 µm (OMYALITE 90® commercialisée par la société OMYA), à raison de 1132 g/litre.

Cette séparation au seuil de densité ds=1,5 conduit à l'obtention de deux fractions :
✔ une première fraction e₁ de densité inférieure à 1,5, représentant 4,983 tonnes de matériaux valorisables (18,58% en poids du flux entrant), contenant en particulier les polyéthylène (PE), polypropylène (PP), polystyrène choc et/ou cristal ignifugé ou non (PS), copolymère acrylonitrile-butadiène-styrène (ABS) non chargé ignifugé ou non, polypropylène chargé de 5% à 40% en poids de talc, des chlorures de polyvinyles (PVC) non chargés et autres
✔ une autre fraction e₂ de densité supérieure ou égale à 1,5, représentant 0,554 tonnes de matériaux valorisables (2,06% en poids du flux entrant), se présentant sous la forme d'un mélange comprenant chlorure de polyvinyle chargé, les polyuréthanes chargés ou autres.

La fraction e₁, mélange de polymères usagés à valoriser sortant de l'étape (J), est soumise à un traitement de séparation par densité en milieu aqueux, dans la zone (L), au seuil de densité ds=1,000, pour en extraire un flux surnageant (f₁) qui est un mélange de (PE) et (PP) et un flux coulant (f₂) comprenant les autres polymères usagés à valoriser.

Le flux surnageant (f₁) qui représente 2,199 T soit 8,2% en poids de la fraction (e₁) est soumis à un traitement de séparation par densité en un milieu hydro-alcoolique (eau et isopropanol) :
- au seuil de densité précis ds=0,930 permettant de récupérer :
- la totalité du polypropylène présent qui surnage représentant 28,68% en poids de la fraction e₁ (1,429 T),
- la totalité du polyéthylène présent qui coule représentant 15,45% en poids de la fraction e₁ (0,770 T), les deux matériaux polymères usagés finement réparés étant directement valorisables sous forme de granulés par leur extrusion.

Le flux coulant (f₂) qui représente 2,784 T soit 55,87% en poids de la fraction (e₁), formé d'un mélange de polystyrène cristal et/ou choc ignifugé ou non, sans charge, d'un copolymère d'acrylonitrile-butadiène-styrène non chargé mais pour certaines fractions ignifugé, des chlorures de polyvinyle non chargés, et de polypropylène chargé de talc de 5% à 40% constitue la fraction des matériaux polymères usagés, dont les densités sont comprises dans l'intervalle 1,000 à 1,500, bornes comprises, et qui sont à séparer selon l'invention.

La fraction f₂, mélange de polymères de synthèse usagés valorisables sortant du séparateur (L) est soumise à un traitement de séparation par densité en milieu aqueux, dans la zone (N), à un seuil de densité "ds"=1,100, pour écarter et recueillir une partie des PS, ABS et PP talc.

Cette séparation est réalisée par densité au seuil de densité choisi 1,100 dans un milieu dense formé d'une suspension aqueuse de CₐCO₃ pulvérulent dispersé dans la phase aqueuse et stabilisée à la valeur ds=1,100 au moyen de la recirculation de ladite suspension selon un débit de 15 m³/h (capacité utile du séparateur hydraulique : 5 m³).

Le milieu dense de séparation se compose :
✔ D'une phase aqueuse ayant une conductivité de 6 ms et un pH de 7,5
✔ De carbonate de calcium pulvérulent dont la dimension diamétrale médiane est de 1 µm et dont la coupe granulométrique est de 5 µm (OMYALITE 90® commercialisée par la société OMYA), à raison de 169,5 g/litre.

Cette séparation au seuil de densité ds=1,100 conduit à l'obtention de deux fractions :
✔ une première fraction g₁ de densité inférieure à 1,100, représentant 1,824 tonnes de matériaux valorisables (6,99% en poids du flux entrant), contenant en particulier du polystyrène (PS), copolymère acrylonitrile-butadiène-styrène (ABS), polypropylène chargé talc, et autres matériaux polymères qui est traitée conformément au traitement pratiqué dans l'exemple 1, pour cette fraction dans les séries de séparation (P) et(R)et
✔ une autre fraction g₂ de densité supérieure ou égale à 1,100, représentant 0,960 tonnes de matériaux valorisables (3,58% en poids du flux entrant), se présentant sous la forme d'un mélange comprenant du polyvinyle chlorure (PVC), du polypropylène chargé talc (charge supérieure à 20% en poids), du polystyrène et un copolymère d'acrylonitrile-butadiène-styrène (ABS) chargés et/ou ignifugés, du polyuréthane (PU) chargé, du polyéthylène (PE) chargé, et autres qui est traitée en vue de valoriser chacun des polymères et plus particulièrement le PVC.

Le flux g₂ est en fait essentiellement constitué de PVC. Ce flux g₂ est dès lors introduit dans la série de séparateurs (Q) par classes de densité créées dans l'intervalle [1,100 à 1,500[, où il est soumis à une séparation par classe de densité croissante au moyen d'un milieu dense de séparation se composant :
- d'une phase aqueuse ayant une conductivité de 6 ms et un pH de 7,5,
- de carbonate de calcium pulvérulent de dimension diamétrale médiane de 1 µm et dont la coupe granulométrique est de 5 µm (OMYALITE 90® commercialisée par la société OMYA) dont les quantités pondérales pour chaque densité sont exprimées dans le tableau V suivant.

Pour ce faire et dans chaque classe de densité connue représentée dans le tableau V, la phase surnageante est récupérée et analysée, et la phase plongeante est recueillie puis soumise à une densité supérieure à la précédente en donnant pour chaque classe une phase surnageante analysée et une phase plongeante soumise à son tour à une densité supérieure.

**Tableau V :**

| **Densité ds établie comme seuil de séparation** | **CₐCO₃ en g/l pulvérulent pour créer ds** | **Limites de chaque classe de densité** | **% en poids dans chaque classe** | **Répartition des polymères dans chaque classe** | | | | | | |
|---|---|---|---|---|---|---|---|---|---|---|
| | | | | **PS** | **ABS** | **PP talc** | **PP** | **PE** | **Autres** | **PVC** |
| | | <1,000 | 44,13% | 0 | 0 | 0 | 29,13 | 15,00 | 0 | 0 |
| 1,000 | 0,00 | [1,000-1,100[ | 36,59% | 20,49 | 9,88 | 6,22 | 0 | 0 | 0 | 0 |
| 1,100 | 169,5 | [1,100-1,350[ | 10,10% | 0,66 | 2,12 | 3,86 | 0 | 0 | 3,06 | 0,40 |
| 1,350 | 700,0 | [1,350-1,400[ | 1,10% | 0 | 0 | 0 | 0 | 0 | 0,95 | 0,15 |
| 1,400 | 834,5 | [1,400-1,450[ | 1,30% | 0 | 0 | 0 | 0 | 0 | 0,78 | 0,52 |
| 1,450 | 977,0 | >1,450 | 6,78% | 0 | 0 | 0 | 0 | 0 | 4,41 | 2,37 |
| TOTAL | | | 100,00% | 21,15 | 12,00 | 10,08 | 29,13 | 15,00 | 9,20 | 3,44 |

- Comme le Tableau V le révèle, le procédé de l'invention assure une excellente maîtrise dans la séparation sélective par densité des matériaux polymères présents, la sensibilité de la densité de séparation atteignant ±0,0005 par rapport au seuil de densité choisi « ds ».
- Toutefois, des matériaux polymères de même densité mais de composition différente sont présents dans le mélange industriel initial traité dans cet exemple de telle sorte que d'autres moyens de séparation doivent être mis en oeuvre en particulier dans la série de séparateurs (S) pour séparer chaque fraction, de polymères de densité identique, chaque type de polymère présent.

### Exemple 3 :

Pour confirmer la capacité du procédé selon l'invention de séparation sélective en milieu liquide dense des constituants d'un mélange de matériaux organiques, de synthèses qui sont des polymères de types différents, mais pour certains très proches les uns des autres en densité, un mélange synthétique a été préparé ayant la composition en poids suivante, résumée dans le tableau VI :

**Tableau VI :**

| **Polymère** | **Densité mesurée** | **Mélanges synthétiques** | |
|---|---|---|---|
| | | **Kilos** | |
| | | **Introduits** | **% en poids** |
| **Copolymère D'éthylène-propylène** | 0, 900 | 450 | 45 |
| **Polystyrène** | 1,050 | 200 | 20 |
| **Copolymère d'éthylène-propylène chargé à 20% de talc** | 1,060 | 150 | 15 |
| **Copolymère acrylonitrile-butadiène-styrène** | 1,070 | 100 | 10 |
| **Polyamide 6** | 1,13 | 40 | 4 |
| **Chlorure de polyvinyle** | 1,38 | 60 | 6 |
| **Total** | | 1000 | 100% |

Ce mélange est soumis à un traitement de séparation par densité dans un milieu liquide dense formé d'une suspension aqueuse de CaCO₃ pulvérulent dispersé dans la phase aqueuse et stabilisée à la valeur de densité ds choisie par un moyen de stabilisation dynamique.
Le milieu dense de séparation se compose :
- D'une phase aqueuse ayant une conductivité de 6 ms et un pH de 7,5
- De carbonate de calcium pulvérulent dont la dimension diamétrale médiane est de 1 µm et dont la coupe granulométrique est de 5 µm (OMYALITE 90® commercialisée par la société OMYA), selon des quantités en g/l nécessaires pour créer des valeurs de densité « ds » croissantes du milieu dense, depuis la valeur initiale ds=1,000 jusqu'à la valeur ds=1,200 pour assurer la séparation sélective.
- La stabilisation de la suspension aqueuse de CaCO₃ pulvérulent dispersé dans la phase aqueuse, à la valeur de densité « ds » choisie est obtenue par une recirculation, sous faible agitation au moyen d'un mobile d'agitation, de 15 m³/h de ladite suspension.

La séparation sélective se fait, dès lors, à travers des seuils de densité « ds » croissants assurant l'obtention pour chaque seuil de densité « ds », de deux fractions polymères, l'une surnageante de densité inférieure à « ds », et l'autre plongeante de densité supérieure à « ds ». Toutes les informations relatives à ces séparations sélectives sont réunies dans le Tableau VII suivant :

**Tableau VII :**

| **Densité ds établie comme seuil de séparation** | **CaCO₃ pulvérulent en g/l pour créer ds** | **Types et quantités de polymères sélectivement séparés** | **% de polymères récupérés par rapport au mélange synthétique initial** |
|---|---|---|---|
| 1,000 | 0,00 | 447,7 kg de copolymère (E/P) | 99,5 |
| 1,055 | 90,70 | 198,2 kg de PS | 99,1 |
| 1,065 | 107,80 | 148,8 kg de copolymère (E/P) à 20% talc | 99,2 |
| 1,075 | 125,20 | 99,0 kg de ABS | 99,0 |
| 1,200 | 361,60 | 38,8 kg de PA 6 | 97, 0 |
| > 1200 | | 59,0 kg de PVC rigide | 98,3 |

Comme il est possible de le constater, la séparation sélective des divers polymères présents dans le mélange synthétique initial par classe de densité croissante d'une suspension aqueuse de CaCO₃ est précise et efficace, puisque chaque polymère présent dans le mélange initial est extrait sélectivement pour chaque seuil de densité « ds » choisi pour ce faire, sans qu'il y ait entraînement de l'un ou l'autre polymère dans des classes voisines, chaque classe de séparation sélective ayant fonctionnée avec une excellente prévision et contenant que le seul polymère sélectionné.

Par rapport à la masse totale du mélange synthétique initial (1000 kg), la perte de polymères au cours de la séparation sélective selon le procédé de l'invention est de 8,5 kg, c'est-à-dire de 0,99% en poids.

### Exemple 4 : (conforme à la figure 1)

Sur le même site que celui de l'exemple 1, de broyage industriel de matériels électroménagers en fin de vie et après la séparation de la majeure partie des divers métaux à récupérer, un flux de 22,4 tonnes de matériaux valorisables formé d'un mélange de polymères de synthèse usagés à valoriser et de matériaux contaminants, est soumis à une phase de préconcentration afin d'extraire de ce mélange, les matériaux polymères usagés valorisables appartenant à l'intervalle de densité allant de 1,000 à 1,200 à traiter selon l'invention.

La composition du flux de matériaux entrant dans La phase de préconcentration est donnée dans le tableau VIII ci-après.

**Tableau VIII :**

| **Matériaux** | **Composition broyée à la grille de 25 mm** | **Teneur en % en poids** |
|---|---|---|
| **Polymères** | PE, PP, PS, ABS, PP Talc, PVC, ... sous forme fragmentée | 65% en poids |
| **Caoutchouc et/ou élastomères** | Tous types de joints et/ou de gainages isolants de câbles électriques | 29% en poids |
| **Métaux** | Fragments de métaux ferreux mais surtout non ferreux : cuivre, aluminium... | 6% en poids |

La préconcentration est effectuée conformément à l'exemple 1 à partir du mélange précité comprenant:
✔ Une fraction de matériaux valorisables, qui sont des matériaux polymères de synthèse non expansés, de nature et/ou de compositions et/ou de facteurs de forme multiples, se présentant sous l'aspect de fragments allant d'un état rigide à un état souple,
✔ Des fractions de matériaux contaminants formés de matériaux métalliques et/ou de matériaux organiques autres que les matériaux polymères non expansés et/ou des matériaux polymères de synthèse dans un état expansé, comporte les étapes de traitement a) à d) de l'exemple 1.
   a) Dans la première étape de séparation mécanique en (A) par criblage et/ou facteur de forme, on a retiré 0,04 tonnes de matériaux contaminant représentant 0,18% en poids du flux entrant.
   b) Dans l'étape b), le flux de matériaux provenant de l'étape a), débarrassé au moins pour partie de la fraction des matériaux contaminants, a été soumise à une séparation par tri aéraulique dans deux séparateurs (B) et (C) couplés.
      Dans le premier séparateur aéraulique (B), la fraction (b₁) représentant 0,52 tonnes de matériaux dits légers a été traitée par aspiration et les fractions b₂ et b₃ extraites par le fond du séparateur aéraulique (B) et représentant 21,84 tonnes de matériaux dits lourds ont été recueillies pour être traitées dans le séparateur aéraulique (C). La fraction (b₁) représente 2,32% en poids de légers éliminés par rapport au flux entrant.
      Le mélange des fractions (b₂) + (b₃) représente 97,5% en poids de matériaux lourds.
      Le mélange des fractions (b₂) et (b₃) représentant 20, 84 tonnes a été introduit dans le deuxième séparateur de tri aéraulique (C). La fraction (b₂) constituée de matériaux contaminants tels que des métaux, représentant une masse de 2,82 tonnes, est extraite par le fond du séparateur aéraulique (C).
      La fraction (b₃), également extraite du séparateur (C), constituée des matériaux polymères valorisables représente une masse de 19,02 tonnes, soit 84,91% en poids par rapport à la masse du flux introduit à préconcentrer.
   c) L'étape de broyage de la fraction (b₃) des matériaux polymères à valoriser provenant de l'étape b), à la maille de libération des matériaux contaminants inclus, est effectuée dans la zone (E), Le broyage se pratiquant sur une grille de 25 mm.
   d) La seconde étape de séparation aéraulique par flux gazeux de la fraction des matériaux polymères de synthèse à valoriser provenant de l'étape c) de broyage est effectuée dans la zone (H), pour en éliminer au moins pour partie la fraction des matériaux contaminants libérés lors du broyage et en extraire la fraction des matériaux valorisables constituant le mélange souhaité, pré-concentré en matériaux valorisables, contenant encore des contaminants.

Cette zone de séparation aéraulique (H), comporte non seulement une séparation par flux gazeux mais également un moyen de criblage, et est formée par un dispositif de séparation modulaire tel que par exemple commercialisé par la société WESTRUP.

De cette zone de séparation(H):
✔ Une fraction (d₃) représentant 18,36 tonnes de matériaux polymères de synthèse valorisables, a été extraite représentant 82% en poids de la masse totale du flux entrant dans la préconcentration,
✔ Une fraction (d₂) représentant 0,14 tonnes de matériaux contaminants lourds formée de métaux et de morceaux de fils électriques a été éliminée, représentant 0,63% en poids de la masse totale du flux entrant dans la préconcentration,
✔ Une fraction (d₁) représentant 0,52 tonnes de matériaux également valorisables a été séparée par aspiration comprenant des mousses résiduelles de polymères, des caoutchoucs fins, des matériaux polymères thermoplastiques et thermodurcissables, représentant 2,32% en poids de la masse totale du flux entrant dans la préconcentration.

La fraction d₃, mélange de polymères de synthèse usagés valorisables sortant de l'étape d) mais de densités éminemment variables comprises dans un intervalle de 0,900 à 1,400, est soumise à un traitement de séparation par densité en milieu aqueux, dans la zone (J), à un seuil de densité ds ≥ 1,2 pour effectuer une première sélection par densité.

Cette séparation est réalisée par densité au seuil de densité choisi 1,2 dans un milieu dense formé d'une suspension aqueuse de kaolin pulvérulent dispersé dans la phase aqueuse et stabilisée à la valeur ds=1,2 par une recirculation de ladite suspension aqueuse à raison de 20 m³/h, la capacité utile du séparateur hydraulique étant de 5 m³.

Le milieu dense de séparation se compose :
✔ D'une phase aqueuse ayant une conductivité de 6,9 ms et un pH de 7,26
✔ De kaolin dont la dimension diamétrale médiane est de 1 µm et dont la coupe granulométrique est de 30 µm, à raison de 373.29 g/l
✔ La stabilisation de la suspension séparative est acquise par un recirculation de la suspension de kaolin à raison de 20 m³/h, la capacité utile du séparateur hydraulique étant de 5 m³.

Cette séparation au seuil de densité ds=1,2 conduit à l'obtention de deux fractions :
✔ une première fraction e₁ de densité inférieure à 1,2, représentant 17,20 tonnes de matériaux valorisables (76.78% en poids du flux entrant), contenant en particulier les polyéthylène (PE), polypropylène (PP), polystyrène choc et/ou cristal ignifugé ou non (PS), copolymère acrylonitrile-butadiène-styrène (ABS) ignifugé ou non, polypropylène chargé de 5% à 40% en poids de talc, et autres matériaux polymères et
✔ une autre fraction e₂ de densité supérieure ou égale à 1,2, représentant 1,16 tonnes de matériaux valorisables (5,18% en poids du flux entrant), se présentant sous la forme d'un mélange comprenant du chlorure de polyvinyle, polyester insaturé chargé, les polyuréthanes chargés ou autres.

La fraction e₁, mélange de polymères usagés à valoriser sortant de l'étape (J), est soumise à un traitement de séparation par densité en milieu aqueux, dans la zone (L), au seuil de densité ds=1,000, pour en extraire un flux surnageant (f₁) qui est un mélange de (PE) et (PP) et un flux coulant (f₂) comprenant les autres polymères usagés à valoriser.

Le flux surnageant (f₁), qui représente 23,50% en poids de la fraction (e₁), est soumis à un traitement de séparation par densité en un milieu hydro-alcoolique (eau et isopropanol) au seuil de densité précis ds=0,930 permettant de récupérer :
- la totalité du polypropylène présent qui surnage, représentant 14,76% en poids de la fraction e₁ (2,54 T)
- la totalité du polyéthylène présent qui coule, représentant 8,74% en poids de la fraction e₁, (1,50 T)
ces deux matériaux polymères usagés, finement séparés, étant directement valorisables sous forme de granulés obtenus par leur extrusion.

Le flux coulant (f₂) qui représente 76,50% en poids de la fraction (e₁), formé d'un mélange de polystyrène cristal et/ou choc ignifugé ou non, sans charge, d'un copolymère d'acrylonitrile-butadiène-styrène non chargé mais pour certaines fractions ignifugé et de polypropylène chargé de talc de 5% à 40% constitue la fraction des matériaux polymères usagés, dont les densités sont comprises dans l'intervalle 1,000 à 1,199, bornes comprises, et qui sont à séparer selon l'invention.

La fraction f₂, mélange de polymères de synthèse usagés valorisables sortant du séparateur (L) est soumise à un traitement de séparation par densité en milieu aqueux, dans la zone (N), à un seuil de densité "ds"=1,100.

Cette séparation est réalisée par densité au seuil de densité choisi 1,100 dans un milieu dense formé d'une suspension aqueuse de kaolin pulvérulent dispersé dans la phase aqueuse et stabilisée à la valeur ds=1,100 par une recirculation de ladite suspension aqueuse à raison de 20 m³/h, la capacité utile du séparateur hydraulique étant de 5 m³.

Le milieu dense de séparation se compose :
✔ D'une phase aqueuse ayant une conductivité de 6,9 ms et un pH de 7,26
✔ De kaolin dont la dimension diamétrale médiane est de 1 µm et dont la coupe granulométrique est de 30 µm, à raison de 174.2 g/l
et est stabilisé par la recirculation de la suspension par son prélèvement au fond du séparateur et sa réinjection hydraulique proche de la surface et ce, à raison d'un débit de recirculation de 20 m³/h.

Cette séparation au seuil de densité ds=1,100 conduit à l'obtention de deux fractions :
✔ une première fraction g₁ de densité inférieure à 1,100, représentant 11,45 tonnes de matériaux valorisables (51,12% en poids du flux entrant), contenant en particulier du polystyrène (PS), copolymère acrylonitrile-butadiène-styrène (ABS), polypropylène chargé talc, et autres matériaux polymères et
✔ une autre fraction g₂ de densité supérieure ou égale à 1,100, représentant 1,75 tonnes de matériaux valorisables (7,81% en poids du flux entrant), se présentant sous la forme d'un mélange comprenant du polypropylène chargé en talc, du polystyrène chargé et/ou ignifugé, des copolymères acrylonitrile-butadiène-styrène (ABS) chargés et/ou ignifugés, ou autres matériaux polymères.

Le flux g₁ est en fait formé :
- d'un mélange de polystyrènes cristal ou choc, traités ou non pour les rendre ignifugés et/ou adjuvantés au moyen de divers agents connus. C'est pourquoi l'intervalle des densités de ces divers polystyrènes est compris entre 1,000 et 1,080.
- d'un mélange copolymères acrylonitrile-butadiène-styrène, dont la densité vraie est déterminée par les quantités relatives des trois monomères mis en oeuvre, par des adjuventations éventuelles et par les traitements d'ignifugation expliquant l'intervalle des densités de ces divers (ABS) qui est compris entre 1,000 et également 1,080.

- d'un mélange de polypropylène chargé en talc dont la teneur en % en poids de talc peut évoluer de 5% à 20%. Dès lors, l'intervalle de densité du polypropylène chargé talc est aussi compris entre 1,000 et 1,080.

Ce flux g₁ est, dès lors, soumis à une séparation par classe de densité croissante au moyen d'un milieu dense de séparation se composant :
- d'une phase aqueuse ayant une conductivité de 6,9 ms et un pH de 7,26,
- de kaolin pulvérulent de dimension diamétrale médiane de 1 µm et dont la coupe granulométrique est de 30 µm dont les quantités pondérales pour chaque densité sont exprimées dans le tableau II suivant
- du moyen dynamique de stabilisation par recirculation d'un volume de suspension, à raison d'un débit de 20 m³/h.

Pour ce faire et dans chaque classe de densité connue représentée dans le tableau IX, la phase surnageante est récupérée et analysée, et la phase plongeante est recueillie puis soumise à une densité supérieure à la précédente en donnant pour chaque classe une phase surnageante analysée et une phase plongeante soumise à son tour à une densité supérieure.

**Tableau IX :**

| **Densité ds établie comme seuil de séparation** | **kaolin en g/l pulvérulent pour créer ds** | **Limites de chaque classe de densité** | **% en poids dans chaque classe** | | |
|---|---|---|---|---|---|
| | | | ***De PS*** | ***d'ABS*** | ***de PP talc*** |
| 1,020 | 33.08 | [1,000 à 1,020[ | 1,25% | 0,60% | 6,40% |
| 1,042 | 70.09 | [1,020 à 1,042[ | 22,30% | 0,00% | 16,50% |
| 1,050 | 83.87 | [1,042 à 1,050[ | 35,55% | 1,60% | 17,15% |
| 1,053 | 89.08 | [1,050 à 1,053[ | 10,08% | 3,25% | 8,05% |
| 1,055 | 92.56 | [1,053 à 1,055[ | 8,25% | 5,65% | 3,10% |
| 1,058 | 97.80 | [1,055 à 1,058[ | 3,95% | 6,35% | 5,25% |
| 1,060 | 101.3 | [1,058 à 1,060[ | 9,05% | 14,40% | 7,60% |
| 1,065 | 110.10 | [1,060 à 1,065[ | 5,62% | 17,10% | 10,35% |
| 1,070 | 118.95 | [1,065 à 1,070[ | 2,75% | 25,80% | 9,30% |
| 1,080 | 136.94 | [1,070 à 1,080[ | 1,20% | 24,25% | 15,90% |
| 1,090 | 154.97 | [1,080 à 1,090[ | 0,00% | 1,00% | 0,40% |
| 1,100 | 173.33 | [1,090 à 1,100[ | 0,00% | 0,00% | 0,00% |
| TOTAL | | | 100% | 100% | 100% |

Les quantités de kaolin mises en oeuvre dans chaque classe de densité sont déterminées par la mesure de la densité et peuvent varier selon la pureté du kaolin utilisé.

Comme le tableau IX le montre,
- le PS est majoritairement présent dans l'intervalle de densité [1,020-1,055[, constituant un premier groupe relatif au PS cristal, mais un deuxième groupe de densité se manifeste dans l'intervalle [1,055-1,070[ qui est relatif au PS choc, sans omettre que certains PS présents sont vraisemblablement ignifugés. Ces diverses classes de densité sont statistiquement justifiées par la présence de plusieurs familles de PS dans ce polymère usagé à valoriser.
- L'ABS est également distribué dans plusieurs classes de densité, mais sa présence est majoritaire dans l'intervalle de densité [1,058-1,080[. Dans le cas de l'ABS, il apparaît également une distribution large des densités en raison de la présence de plusieurs types d'ABS dont les compositions peuvent varier par les quantités relatives de leurs monomères et également par la présence d'agents d'ignifugation.
- Le PP talc est aussi distribué dans plusieurs classes par des variations importantes de densité en raison de la présence de la charge de talc qui peut varier de 5% en poids à 20% en poids.

Pour réaliser la séparation effective du PS, de l'ABS et du PP talc présents dans une même classe de densité, le mélange des matériaux polymères usagés à valoriser extrait de chaque classe de densité du tableau II, est soumis à une nouvelle séparation par densité croissante ou décroissante au moyen d'un milieu dense de séparation se composant :
- D'une phase aqueuse ayant une conductivité de 6,9 ms et un pH de 7,26,
- De kaolin pulvérulent de dimension diamétrale médiane de 1 µm et dont la coupe granulométrique est de 30 µm et dont les quantités pondérales sont exprimées dans le tableau III suivant
- du moyen dynamique de stabilisation par recirculation d'un volume de suspension, à raison d'un débit de 20 m³/h.

A titre d'exemple, deux classes seulement de séparation par densité, issues du tableau II, sont sélectionnées et traitées conformément à l'invention, pour illustrer la capacité du procédé de séparation sélective pour l'établissement de suspensions séparatives stables et invariantes en densité, quand est créé le niveau de densité "ds" choisi comme seuil de séparation des divers matériaux polymères usagés à séparer, le niveau de précision de la densité pouvant atteindre en valeur absolue |0,001|, c'est-à-dire pouvant atteindre autour de la valeur "ds" choisie une précision par rapport à cette valeur "ds" de ±0,0005.

Il est toutefois rappelé que des polymères usagés de nature chimique différente mais de densité exactement identique ne sont pas séparables par le procédé de l'invention et nécessitent d'autres moyens de séparation basés sur d'autres critères.

Les deux classes de densité issues du tableau II, et traitées selon le procédé de l'invention sont les suivantes :
[1,042 à 1,050[
et [1,065 à 1,070[

Pour ce faire et dans chaque classe de densité connue représentée dans le tableau X, la phase surnageante est récupérée et analysée, et la phase plongeante est recueillie puis soumise à une densité supérieure à la précédente en donnant pour chaque classe une phase surnageante analysée et une phase plongeante soumise à son tour à une densité supérieure.

Cette séparation très sélective a donné, pour chaque classe, les résultats consignés classe par classe dans le Tableau X suivant :

**Tableau X :**

| **Densité ds établie comme seuil de séparation** | **kaolin en g/l pulvérulent pour créer ds** | **Limites de chaque classe de densité** | **% en poids dans chaque classe** | | |
|---|---|---|---|---|---|
| | | | ***De PS*** | ***d'ABS*** | ***de PP talc*** |
| 1,043 | 72.16 | [1,042-1,043[ | 0 | 0 | 0,608 |
| 1,044 | 73,89 | [1,043-1,044[ | 0 | 0 | 0,610 |
| 1,045 | 75.62 | [1,044-1,045[ | 0 | 0 | 0,754 |
| 1,046 | 77.35 | [1,045-1,046[ | 0 | 0 | 1,027 |
| 1,047 | 79.08 | [1,046-1,047[ | 0 | 0 | 0,307 |
| 1,048 | 80.81 | [1,047-1,048[ | 0 | 0 | 0,920 |
| 1,049 | 82.55 | [1,048-1,049[ | 7,12 | 0 | 3,049 |
| 1,050 | 84.29 | [1,049-1,050[ | 15,105 | 0 | 9,125 |
| 1,066 | 112.42 | [1,065-1,066[ | 1,052 | 0,113 | 6,125 |
| 1,067 | 114.20 | [1,066-1,067[ | 0,920 | 0,320 | 1,950 |
| 1,068 | 115.98 | [1,067-1,068[ | 1,248 | 0,827 | 1,058 |
| 1,069 | 117.76 | [1,068-1,069[ | 1,065 | 5,686 | 0,745 |
| 1,070 | 119.55 | [1,069-1,070[ | 1,315 | 10,254 | 0,522 |

- Comme le Tableau X le révèle, le procédé selon l'invention assure une excellente maîtrise dans la séparation sélective par densité des matériaux polymères présents, la sensibilité de la densité de séparation atteignant ±0,0005 par rapport au seuil de densité choisi « ds ».

Toutefois, des matériaux polymères de même densité mais de composition différente sont présents dans le mélange industriel initial traité dans cet exemple de telle sorte que d'autres moyens de séparation doivent être mis en oeuvre pour séparer dans chaque fraction, de polymères de densité identique, chaque type de polymère présent.

### Exemple 5: (conforme à la figure 1)

Conformément à l'exemple 1, un flux de 21,88 tonnes de matériaux valorisables issus de la séparation la séparation de la majeure partie des divers métaux à récupérer, formé d'un mélange de polymères de synthèse usagés à valoriser et de matériaux contaminants à éliminer est soumis à une phase de préconcentration afin de sélectionner dans ce mélange de matériaux polymères usagés à valoriser.

La composition du flux de matériaux entrant dans la phase de préconcentration est conforme aux données du tableau I de l'exemple 1 et reproduit ci-après.

**Tableau XI :**

| **Matériaux** | **Composition et granulométrie** | **Teneur en % en poids** |
|---|---|---|
| **Polymères** | PE, PP, PS, ABS, PP Talc, PVC,... sous forme fragmentée | 73% en poids |
| **Caoutchouc et/ou élastomères** | Tous types de joints et/ou de gainages isolants de câbles électriques | 19% en poids |
| **Métaux** | Fragments de métaux ferreux mais surtout non ferreux : cuivre, aluminium... | 8% en poids |

Le mélange à traiter ainsi que les étapes de traitement de a) à d) sont identiques à ceux de l'exemple 1:
De la zone (G/H) de séparation aéraulique et de criblage selon l'étape d) conformément à l'exemple 1:
   ✔ Une fraction (d₃) représentant 15,8 tonnes de matériaux polymères de synthèse valorisables, essentiellement des thermoplastiques et un peu de thermodurcissables, a été extraite sous forme de paillettes, de plaquettes et autres broyats représentant 72,2% en poids de la masse totale du flux entrant dans la préconcentration,
   ✔ Une fraction (d₂) représentant 0,06 tonnes de matériaux contaminants lourds formée de métaux et de morceaux de fils électriques a été éliminée par criblage, représentant 0,27% en poids de la masse totale du flux entrant dans la préconcentration,
   ✔ Une fraction (d₁) représentant 0,32 tonnes de matériaux également valorisables a été séparée par aspiration comprenant des mousses résiduelles de polymères, des caoutchoucs fins, des matériaux polymères thermoplastiques et thermodurcissables, sous forme de poudre de paillettes, de plaquettes, représentant 1,46% en poids de la masse totale du flux entrant dans la préconcentration,

La fraction d₃, mélange de polymères de synthèse usagés valorisables sortant de l'étape d) mais de densités éminemment variables comprises dans un intervalle de 0,900 à 1,400 est soumise à un traitement de séparation par densité en milieu aqueux, dans la zone (J), à un seuil de densité ds ≥ 1,2 pour effectuer une première sélection par densité.

Cette séparation est réalisée par flottation au seuil de densité choisi 1,2 dans un milieu dense formé d'une suspension aqueuse de CaCO₃ pulvérulent dispersé dans la phase aqueuse et stabilisée à la valeur ds=1,2 au moyen d'une recirculation séquentielle de la suspension, c'est à dire par alternance de cycles de circulation de 20s et de cycles d'arrêt de 20s, prélevée au fond du séparateur et réinjectée près de la surface à raison d'un débit de recirculation de 2 m³/h.

Le milieu dense de séparation comporte :
✔ une phase aqueuse ayant une conductivité de 5,9 ms et un pH de 7,42
✔ du carbonate de calcium pulvérulent dont la dimension diamétrale médiane est de 1 µm et dont la coupe granulométrique est de 5 µm (OMYALITE 90 commercialisée par la société OMYA), à raison de 362g/l
✔ la stabilisation de la suspension séparative est acquise par une recirculation séquentielle de la suspension de carbonate de calcium à raison de 2 m³/h, la capacité utile du séparateur hydraulique étant de 5 m³.

Cette séparation au seuil de densité ds=1,2 conduit à l'obtention de deux fractions (cf. tableau XII):

**Tableau XII:**

| **Fraction** | **Densité** | **Masse** | **Composition** |
|---|---|---|---|
| **e₁** | <1,2 | 14,56 tonnes de matériaux valorisables, 66,54% en poids du flux entrant | PE, PP, PS, ABS ignifugé ou non, PP chargé de 5 à 40% en poids de talc ... |
| **e₂** | > ou = 1,2 | 1,24 tonnes de matériaux valorisables, 5,67% en poids du flux entrant | chlorure de polyvinyle, du polyester insaturé chargé, les polyuréthanes chargés ou autres. |

La fraction e₁, mélange de polymères usagés à valoriser sortant de l'étape (J), est soumise à un traitement de séparation par densité en milieu aqueux, dans la zone (L), au seuil de densité ds=1,000, pour en extraire un flux surnageant (f₁) qui est un mélange de (PE) et (PP) et un flux coulant (f₂) comprenant les autres polymères usagés à valoriser.

Le flux surnageant (f₁), qui représente 3,407 T (23,40% en poids de la fraction (e₁)), est soumis à un traitement de séparation par densité en un milieu hydro-alcoolique (eau et isopropanol) au seuil de densité précis ds=0,930 permettant de récupérer :
- la totalité du polypropylène présent (2,146 T) qui surnage, représentant 14,74% en poids de la fraction e₁
- la totalité du polyéthylène présent(1,261 T) qui coule, représentant 8,66% en poids de la fraction e₁,
ces deux matériaux polymères usagés, finement séparés, étant directement valorisables sous la forme de granulés obtenus par leur extension.

Le flux coulant (f₂) qui représente 11,153 T [76,60% en poids de la fraction (e₁)], formé d'un mélange de polystyrène cristal et/ou choc ignifugé ou non, sans charge, d'un copolymère d'acrylonitrile-butadiène-styrène non chargé mais pour certaines fractions ignifugé et de polypropylène chargé de 5% à 40% de talc constitue la fraction des matériaux polymères usagés, dont les densités sont comprises dans l'intervalle 1,000 à 1,199, bornes comprises, et qui sont à séparer selon l'invention.

La fraction f₂, mélange de polymères de synthèse usagés valorisables sortant du séparateur (L) est soumise à un traitement de séparation par densité en milieu aqueux, dans la zone (N), à un seuil de densité "ds"=1,100.

Cette séparation est réalisée par densité au seuil de densité choisi 1,100 dans un milieu dense formé d'une suspension aqueuse de CaCO₃ pulvérulent dispersé dans la phase aqueuse et stabilisée à la valeur ds=1,100 au moyen d'une recirculation séquentielle de la suspension, c'est à dire par alternance de cycles de circulation de 20s et de cycles d'arrêt de 20s de la suspension, à raison de 2 m³/h.

Le milieu dense de séparation comporte :
✔ une phase aqueuse ayant une conductivité de 5,9 ms et un pH de 7,42
✔ du carbonate de calcium pulvérulent dont la dimension diamétrale médiane est de 1 µm et dont la coupe granulométrique est de 5 µm (OMYALITE 90 commercialisée par la société OMYA), à raison de 187.7g/l
et est stabilisé par la recirculation séquentielle de la suspension par son prélèvement au fond du séparateur et sa réinjection hydraulique proche de la surface et ce, à raison d'un débit de recirculation de 2 m³/h.

Cette séparation au seuil de densité ds=1,100 conduit à l'obtention de deux fractions (cf. tableau XIII) :

**Tableau XIII :**

| **Fraction** | **Densité** | **Masse** | **Composition** |
|---|---|---|---|
| **g₁** | <1,1 | 10,762 tonnes de matériaux valorisables, 49,19% en poids du flux entrant | PS, ABS, PP chargé de talc et autres matériaux polymères.. |
| **g₂** | > ou = 1, 1 | 0, 381 tonnes de matériaux valorisables, 1,74% en poids du flux entrant | PC, PP chargé de 30 à 40% talc, PVC, PMMA, PU chargés ou autres... |

Le flux g₁ est en fait formé :
- d'un mélange de polystyrènes cristal ou choc, traités ou non pour les rendre ignifugés et/ou adjuvantés au moyen de divers agents connus. C'est pourquoi l'intervalle des densités de ces divers polystyrènes est compris entre 1,000 et 1,080.
- d'un mélange copolymères acrylonitrile-butadiène-styrène, dont la densité vraie est déterminée par les quantités relatives des trois monomères mis en oeuvre, par des adjuventations éventuelles et par les traitements d'ignifugation expliquant l'intervalle des densités de ces divers ABS qui est compris entre 1,000 et également 1,080.
- d'un mélange de polypropylène chargé en talc dont la teneur en % en poids de talc peut évoluer de 5% à 20%. C'est pourquoi, l'intervalle de densité du polypropylène chargé talc est aussi compris entre 1,000 et 1,080.

Ce flux g₁ est, dès lors, soumis à une séparation dans la zone (P) par classe de densité croissante au moyen d'un milieu dense de séparation se composant :
- d'une phase aqueuse ayant une conductivité de 5,7 ms et un pH de 7,53,
- de carbonate de calcium pulvérulent de dimension diamétrale médiane de 1 µm et dont la coupe granulométrique est de 5 µm (OMYALITE 90 commercialisée par la société OMYA) dont les quantités pondérales pour chaque densité sont exprimées dans le tableau II suivant,
- du moyen dynamique de stabilisation par recirculation séquentielle d'un volume de suspension, à raison d'un débit de 2 m³/h.

Pour ce faire et dans chaque classe de densité connue représentée dans le tableau XIV, la phase surnageante est récupérée et analysée, et la phase plongeante est recueillie puis soumise à une densité supérieure à la précédente en donnant pour chaque classe une phase surnageante analysée et une phase plongeante soumise à son tour à une densité supérieure.

**Tableau XIV :Traitement du flux g1**

| **Densité ds établie comme seuil de séparation** | **CₐCO₃ en g/l pulvérulent pour créer ds** | **Limites de chaque classe de densité** | **Moyen de stabilisation: débit en m³/h** | **% en poids dans chaque classe** | | |
|---|---|---|---|---|---|---|
| | | | | ***De PS*** | ***d'ABS*** | ***de PP talc*** |
| 1,02 | 32,30 | [1,000 à 1,020[ | 2 | 1,10% | 0,30% | 5,15% |
| 1,042 | 68,75 | [1,020 à 1,042[ | 2 | 22,01% | 0,10% | 16,39% |
| 1,05 | 82,2 | [1,042 à 1,050[ | 2 | 36,19% | 1,31% | 18,50% |
| 1,053 | 87,3 | [1,050 à 1,053[ | 2 | 10,21% | 3,10% | 7,94% |
| 1,055 | 90,7 | [1,053 à 1,055[ | 2 | 8,10% | 5,40% | 2,90% |
| 1,058 | 95,8 | [1,055 à 1,058[ | 2 | 3,50% | 6,50% | 5,50% |
| 1,06 | 99,2 | [1,058 à 1,060[ | 2 | 9,29% | 14,59% | 7,62% |
| 1,065 | 107,8 | [1,060 à 1,065 | 2 | 6,10% | 17,30% | 9,10% |
| 1,07 | 116,50 | [1,065 à 1,070[ | 2 | 2,50% | 25,60% | 9,00% |
| 1,08 | 134,00 | [1,070 à 1,080[ | 2 | 1,00% | 24,60% | 17,50% |
| 1,09 | 151,70 | [1,080 à 1,090[ | 2 | 0% | 1,10% | 0,30% |
| 1,1 | 169,50 | [1,090 à 1,100[ | 2 | 0% | 0,10% | 0,10% |
| TOTAL | | | | 100,00% | 100,00% | 100,00% |

Comme le tableau XIV le montre,
- le PS est majoritairement présent dans l'intervalle de densité [1,020-1,055[, constituant un premier groupe relatif au PS cristal, mais un deuxième groupe de densité se manifeste dans l'intervalle [1,055-1,070[ qui est relatif au PS choc, sans omettre que certains PS présents sont vraisemblablement ignifugés. Ces diverses classes de densité sont statistiquement justifiées par la présence de plusieurs familles de PS dans ce polymère usagé à valoriser.
- L'ABS est également distribué dans plusieurs classes de densité, mais sa présence est majoritaire dans l'intervalle de densité [1,058-1,080[. Dans le cas de l'ABS, il apparaît également une distribution large des densités en raison de la présence de plusieurs types d'ABS dont les compositions peuvent varier par les quantités relatives de leurs monomères et également par la présence d'agents d'ignifugation.
- Le PP talc est aussi distribué dans plusieurs classes par des variations importantes de densité en raison de la présence de la charge de talc qui peut varier de 5% en poids à 20% en poids.

Pour réaliser la séparation effective du PS, de l'ABS et du PP talc présents dans une même classe de densité, le mélange des matériaux polymères usagés à valoriser extrait de chaque classe de densité du tableau XIV, est soumis à une nouvelle séparation par densité croissante ou décroissante dans la zone de séparation (R) au moyen d'un milieu dense de séparation se composant :
- D'une phase aqueuse ayant une conductivité de 6,8 ms et un pH de 8,1,
- De carbonate de calcium pulvérulent de dimension diamétrale médiane de 1 µm et dont la coupe granulométrique est de 5 µm (OMYALITE 90® commercialisée par la société OMYA) et dont les quantités pondérales sont exprimées dans le tableau III suivant,
- Du moyen dynamique de stabilisation par recirculation séquentielle d'un volume de suspension, à raison d'un débit de 2 m³/h.

A titre d'exemple, deux classes seulement de séparation par densité, issues du tableau II, sont sélectionnées et traitées conformément à l'invention, pour illustrer la capacité du procédé de séparation sélective pour l'établissement de suspensions séparatives stables et invariantes en densité, quand est créé le niveau de densité "ds" choisi comme seuil de séparation des divers matériaux polymères usagés à séparer, le niveau de précision de la densité pouvant atteindre en valeur absolue |0,001|, c'est-à-dire pouvant atteindre autour de la valeur "ds" choisie une précision par rapport à cette valeur "ds" de ±0,0005.

Les deux classes de densité issues du tableau XIV, et traitées selon le procédé de l'invention sont les suivantes :
[1,042 à 1,050[
et [1,065 à 1,070[

Cette séparation très sélective a donné, pour chaque classe, les résultats consignés classe par classe dans le Tableau XV suivant :

**Tableau XV : Traitement de deux classes de densité, issues du flux g1.**

| **Densité ds établie comme seuil de séparation** | **CaCO3 en g/l pulvérulent pour créer ds** | **Limites de chaque classe de densité** | **% en poids dans chaque classe** | | |
|---|---|---|---|---|---|
| | | | ***De PS*** | ***d'ABS*** | ***de PP talc*** |
| 1,043 | 70,4 | [1,042-1,043[ | 0 | 0 | 0,32 |
| 1,044 | 72,8 | [1,043-1,044[ | 0 | 0 | 0,35 |
| 1,045 | 74,5 | [1,044-1,045[ | 0 | 0 | 0,52 |
| 1,046 | 76,2 | [1,045-1,046[ | 0 | 0 | 0,49 |
| 1,047 | 77,2 | [1,046-1,047[ | 0 | 0 | 0,32 |
| 1,048 | 78,8 | [1,047-1,048[ | 0 | 0 | 0,55 |
| 1,049 | 80,5 | [1,048-1,049[ | 6,45 | 0 | 4,05 |
| 1,05 | 82,2 | [1,049-1,050[ | 15,55 | 0,1 | 9,8 |
| 1,066 | 109,6 | [1,065-1,066[ | 0,92 | 0,08 | 6,67 |
| 1,067 | 111,3 | [1,066-1,067[ | 0,75 | 0,28 | 0,85 |
| 1,068 | 113 | [1,067-1,068[ | 1,04 | 0,79 | 0,69 |
| 1,069 | 114,7 | [1,068-1,069[ | 2,16 | 5,79 | 0,51 |
| 1,07 | 116,5 | [1,069-1,070[ | 1,23 | 10,36 | 0,38 |

- Comme le Tableau XV le révèle, le procédé selon l'invention assure une excellente maîtrise dans la séparation sélective par densité des matériaux polymères présents, la sensibilité de la densité de séparation atteignant ±0,0005 par rapport au seuil de densité choisi « ds ».

Toutefois, des matériaux polymères de même densité mais de composition différente sont présents dans le mélange industriel initial traité dans cet exemple de telle sorte que d'autres moyens de séparation doivent être mis en oeuvre pour séparer dans chaque fraction, de polymères de densité identique, chaque type de polymère présent.

L'autre fraction g₂ de densité supérieure à 1,100 représentant 0,381 tonnes de matériaux valorisables comprenant un mélange de polycarbonate (PC), du polypropylène (PP) chargé talc, du chlorure de polyvinyle (PVC), des polyméthyl méthacrylate (PMMA), des polyuréthanes (PU) chargés, est traitée, selon le même principe que la fraction g₁, dans les zones de séparation (Q) et (S), non décrites.

## Revendications

1. Procédé de séparation sélective de chacun des constituants d'un mélange de matériaux organiques de synthèse que sont les polymères et/ou copolymères, en particulier usagés et à valoriser par recyclage, de densité au moins égale à 1, se présentant sous une forme fragmentée, consistant à effectuer leur séparation par l'introduction dudit mélange dans un milieu liquide dense, qui est une suspension aqueuse de particules pulvérulentes dispersées en quantité adéquate dans une phase aqueuse, pour créer un niveau de densité "ds" choisi comme seuil de séparation des divers matériaux organiques de synthèse fragmentés à séparer sélectivement par type, **caractérisé en ce que** ladite suspension séparative est rendue sélective, stable et invariante en densité à un niveau de précision de ±0,0005 par rapport au seuil de densité "ds" choisi pour la séparation sélective :
a) par la sélection dimensionnelle de particules pulvérulentes dont la coupe granulométrique est d'au plus 30 µm, ces particules solides pulvérulentes ainsi dimensionnées étant dispersées et présentes dans une phase aqueuse en quantité suffisante pour atteindre le seuil de densité "ds" choisi, et
b) par la mise en oeuvre d'au moins un moyen dynamique de stabilisation de manière à déplacer la suspension séparative suivant un débit circulant d'au moins 5 m³/h et d'au plus 40 m³/h.

2. Procédé selon la revendication 1 caractérisé en ce ladite suspension séparative est rendue sélective, stable et invariante en densité à un niveau de précision de ±0,0005 par rapport au seuil de densité "ds" choisi pour la séparation sélective, par la sélection dimensionnelle de particules solides pulvérulentes dont la coupe granulométrique est préférentiellement d'au plus 20 µm, et très préférentiellement d'au plus 5 µm, ces particules pulvérulentes ainsi dimensionnée étant dispersée et présentes dans une phase aqueuse en quantité suffisante pour atteindre le seuil de densité "ds" choisi."

3. Procédé selon la revendication 1 **caractérisé en ce que** les particules pulvérulentes sont d'origine naturelle et choisies dans le groupe des matériaux minéraux pulvérulents constitué par les argiles appartenant aux familles formées par le groupe des kaolinites, comprenant la kaolinite, la dickite, l'halloysite, les kaolinites désordonnées, les serpentines, le groupe des micas, en particulier la muscovite, la biotite et la paragonite, la pyrophyllite et le talc, les illites et la glauconite, par le groupe des montmorillonites, en particulier le beidéllite, la stévensite, la saponite, et l'hectorite ; par le groupe des chlorites ; par le groupe des vermiculites ; par le groupe des argiles interstratifiées dont la structure unitaire est une combinaison des groupes précédents ; par le groupe des argiles fibreuses, en particulier l'attapulgite (palygorskite), la sépiolite ; par le groupe formé par le carbonate de calcium (la calcite), le carbonate de magnésium, la dolomie (carbonate double de calcium et de magnésium), le sulfate de calcium dihydraté (gypse), le sulfate de baryum, le talc, l'alumine, la silice, le dioxyde de titane, la zircone.

4. Procédé selon la revendication 1 **caractérisé en ce que** les particules pulvérulentes sont d'origine synthétique et choisies dans le groupe constitué par les poudres de verre, le carbonate de calcium précipité, les poudres métalliques.

5. Procédé selon l'une au moins des revendications 1 à 4 **caractérisé en ce que** les particules pulvérulentes ont un diamètre médian d'au plus 5 µm et préférentiellement compris entre 1 µm à 0,005 µm.

6. Procédé selon l'une au moins des revendications 1 à 5 **caractérisé en ce que** le moyen dynamique de stabilisation est choisi dans le groupe constitué par une agitation au moyen d'un mobile d'agitation, par une recirculation interne de la suspension au moyen du mobile d'agitation, par une recirculation externe de la suspension au moyen d'une pompe par prélèvement de la suspension dans le fond du conteneur où elle se trouve et par réinjection dans la partie supérieure dudit conteneur, ou par la combinaison des moyens permettant d'associer agitation au moyen d'un mobile d'agitation et recirculation interne et/ou externe de la suspension.

7. Procédé selon l'une au moins des revendications 1 à 6 **caractérisé en ce que** le moyen dynamique de stabilisation est une recirculation continue ou discontinue de la suspension.

8. Procédé selon la revendication 1 **caractérisé en ce que** le débit circulant de la suspension séparative est compris entre 5 et 30 m³/h et préférentiellement compris entre 5 et 15 m³/h.

9. Procédé selon l'une au moins des revendications 1 à 8 **caractérisé en ce que** le débit circulant de la suspension séparative est réglé sur un taux de renouvellement horaire de ladite suspension compris entre 0,5 et 4 et préférentiellement compris entre 0,5 et 2.

10. Procédé selon l'une au moins des revendications 1 à 9 **caractérisé en ce que**, la phase aqueuse a une conductivité d'au plus 50 ms et préférentiellement comprise entre 0,2 ms et 40 ms.

11. Procédé selon l'une au moins des revendications 1 à 10 **caractérisé en ce que**, un agent hydrosoluble d'aide à la stabilisation des caractéristiques rhéologiques et d'invariance de la densité apparente « ds » de la suspension de particules solides pulvérulentes est introduit dans ladite suspension.

12. Procédé selon la revendication 11 **caractérisé en ce que** l'agent hydrosoluble d'aide à la stabilisation des caractéristiques rhéologiques et d'invariance de la densité apparente "ds" de la suspension de particules solides pulvérulentes, est choisi dans le groupe constitué par les phosphates et polyphosphates, les esters alkylphosphates, alkylphosphonate, alkylsulphate, alkylsulfonate, la lignine, les lignosulfonates sous forme de sels de calcium, de sodium, de fer, de chrome, de fer et de chrome, les copolymères d'anhydride maléique et d'acide styrène sulfonique, les copolymères de méthylacrylamide et d'acide (méthyl) acrylique substitués, neutralisés, estérifiés ou non, les copolymères, d'acide méthylacrylamido-alkyl sulfonique et de (méthyl) acrylamide, les polymères hydrosolubles d'acide acrylique mis en oeuvre sous la forme acide ou, éventuellement, neutralisé en tout ou en partie par des agents alcalin et/ou alcalino-terreux, par les amines et/ou salifiées par des ions monovalents et/ou polyvalents, et/ou estérifiées ou encore parmi les copolymères acryliques, hydrosolubles disposant de fonctions phosphatées, phosphonées, sulfatées, sulfonées.

13. Procédé selon l'une quelconque des revendications 11 et 12 **caractérisé en ce que** l'agent hydrosoluble de stabilisation est préférentiellement choisi parmi les copolymères acryliques hydrosolubles, répondant à la formule générale : 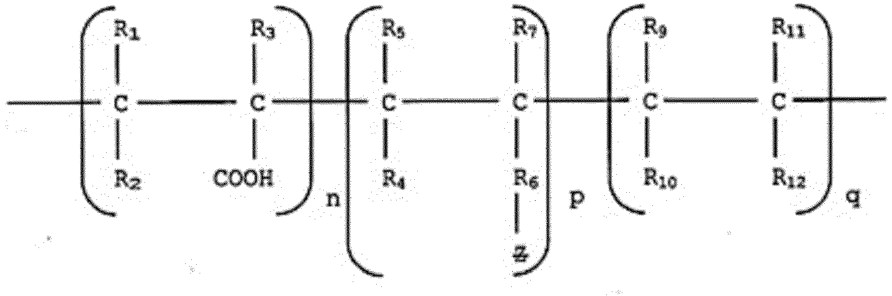
✔ Z est un motif de type phosphate, phosphonate, sulfate, sulfonate, ayant au moins une fonction acide libre,
✔ prend une valeur comprise entre 0 et 95,
✔ prend une valeur comprise entre 95 et 5,
✔ prend une valeur comprise entre 0 et 95,
✔ le cumul de n+p+q étant égal à 100,
✔ R₁ et R₂ peuvent être simultanément de l'hydrogène ou pendant que l'un est de l'hydrogène, l'autre est une fonction carboxylique estérifiée ou non par un alcool en C₁ à C₁₂,
✔ R₃ est de l'hydrogène ou un radical alkyl en C₁ à C₁₂,
✔ R₄ et R₅ sont, simultanément ou non, de l'hydrogène ou un radical alkyl en C₁ à C₁₂, un aryle substitué ou non, une fonction carboxylique estérifiée ou non par un alcool en C₁ à C₁₂,
✔ R₆ est un radical, qui établit le lien entre le motif Z et la chaîne polymérique, ce radical R₆ pouvant être un alkylène de formule (-CH₂-)ᵣ dans laquelle r peut prendre les valeurs de l'intervalle 1 à 12, un oxyde ou polyoxyde d'alkylène de formule (R₈-O)ₛ dans laquelle R₈ est un alkylène en C₁ à C₄ et s peut prendre les valeurs de 1 à 30, ou encore une combinaison des deux formules (CH₂)ᵣ et (R₈-O)ₛ,
✔ R₇ est de l'hydrogène ou un radical alkyl en C₁ à C₁₂,
✔ R₉ et R₁₀ sont simultanément de l'hydrogène, ou pendant que l'un est de l'hydrogène, l'autre est un groupement carboxylique, un ester en C₁ à C₁₂, un alkyle en C₁ à C₁₂, un aryle en C₅ ou C₆ ou un alkylaryle,
✔ R₁₁ est de l'hydrogène, un groupement carboxylique, un alkyle en C₁ à C₃ ou un halogène,
✔ R₁₂ est un ester en C₁ à C₁₂, un amide substitué ou non, un alkyl en C₁ à C₁₂, un aryle en C₅ ou C₆, un alkylaryle, un halogène, un groupement carboxylique ou encore un groupement alkyle ou aryle, phosphaté, phosphoré, sulfaté, sulfoné.

14. Procédé selon la revendication 13, **caractérisé en ce que** dans le motif Z, les fonctions acides non libres sont occupées par un cation, un groupement ammonium, une amine, un alkyle en C₁ à C₃, un aryle en C₃ à C₆ substitué ou non, un alkylaryle, un ester en C₁ à C₁₂ de préférence en C₁ à C₃, ou un amide substitué.

15. Procédé selon la revendication 13, **caractérisé en ce que** dans le cumul n + p + q, n = 0, quand q > 0 et q = 0 quand n > 0.

16. Procédé selon la revendication 13, **caractérisé en ce que**, dans les motifs R₁ et R₂, l'alcool estérifiant la fonction carboxylique est de préférence en C₁ à C₄.

17. Procédé selon la revendication 13, **caractérisé en ce que**, dans le motif R₃, le radical alkyl est de préférence en C₁ à C₄.

18. Procédé selon la revendication 13, **caractérisé en ce que**, dans les motifs R₄ et R₅, le radical alkyl est de préférence en C₁ à C₄.

19. Procédé selon la revendication 13, **caractérisé en ce que**, dans les motifs R₄ et R₅, l'alcool estérifiant la fonction carboxylique est de préférence en C₁ à C₄.

20. Procédé selon la revendication 13, **caractérisé en ce que**, dans le motif R₇, le radical alkyl est de préférence en C₁ à C_{4.}

21. Procédé selon la revendication 13, **caractérisé en ce que**, dans les motifs R₉ et R₁₀, l'ester est préférentiellement en C₁ à C_{3.}

22. Procédé selon la revendication 13, **caractérisé en ce que**, dans les motifs R₉ et R₁₀, l'alkyle est préférentiellement en C₁ à C_{3.}

23. Procédé selon la revendication 13, **caractérisé en ce que**, dans le motif R₁₂, l'ester est préférentiellement en C₁ à C₅.

24. Procédé selon la revendication 13, **caractérisé en ce que**, dans le motif R₁₂, l'alkyle est de préférence en C₁ à C₃.

25. Procédé selon la revendication 13, **caractérisé en ce que** la masse moléculaire des copolymères acryliques hydrosolubles formant l'agent de stabilisation, est comprise entre 5000 et 100 000.

26. Procédé selon la revendication 13, **caractérisé en ce que** les copolymères acryliques hydrosolubles formant l'agent de stabilisation sont au moins partiellement neutralisés, au moyen d'un agent de neutralisation choisi dans le groupe constitué par les hydroxydes de sodium, de potassium, d'ammonium, de calcium, de magnésium et les amines primaires, secondaires et tertiaires, aliphatiques et/ou cycliques, en particulier les mono, di, tri éthanolamines, les mono et diéthylamines, la cyclohexylamine, la méthylcyclohexylamine.

27. Procédé selon l'une quelconque des revendications 10 à 13 **caractérisé en ce que**, la quantité pondérale de l'agent hydrosoluble de stabilisation exprime en % en poids sec/sec dudit agent par rapport à la quantité pondérale de particules pulvérulentes mises en suspension, est comprise entre 0,02% et 5%, et préférentiellement entre 0,1% et 2%.

28. Procédé selon l'une au moins des revendications 1 à 27 **caractérisé en ce que** ledit procédé est conduit dans au moins un séparateur hydraulique muni d'au moins un moyen dynamique de stabilisation.

29. Procédé selon la revendication 28 **caractérisé en ce que**, quand ledit procédé est conduit dans un seul séparateur hydraulique, la densité « ds » choisie évolue :
- dans le sens croissant, par ajout contrôlé des particules pulvérulentes définies et sélectionnées dans la suspension présente dans ledit séparateur hydraulique, jusqu'à atteindre la nouvelle densité « ds » seuil choisie,
- dans le sens décroissant par ajout d'eau jusqu'à atteindre la nouvelle densité « ds » seuil choisie.

30. Procédé selon la revendication 29 **caractérisé en ce que** l'évolution de la densité de la suspension stable séparative, dans un sens croissant ou décroissant, s'effectue sous une agitation au moyen d'un mobile d'agitation et/ou d'une recirculation interne et/ou d'une recirculation par prélèvement dans le fond du séparateur hydraulique et réinjection au sommet dudit séparateur du milieu aqueux dense en cours de correction.

31. Procédé selon la revendication 28 **caractérisé en ce que**, dans le cas où ledit. procédé est conduit dans plusieurs séparateurs hydrauliques, les divers séparateurs sont placés les uns à la suite des autres, selon un système en cascade fonctionnant avec des suspensions stables ayant chacune un seuil de densité « ds » précis, dans un ordre croissant ou décroissant des densités.

32. Procédé selon l'une quelconque des revendications 28 à 31 **caractérisé en ce que**, la densité seuil « ds » de la suspension aqueuse de séparation fine est contrôlée en continu par des moyens appropriés de mesure et soumise à correction dès lors qu'une dérive est perçue.

33. Procédé selon la revendication 32 **caractérisé en ce que**, chaque séparateur hydraulique est piloté quant à la densité du milieu dense qu'il contient au moyen de deux électrovannes s'ouvrant chacune sur deux circuits connectés à deux réservoirs, l'un des réservoirs contenant une suspension « mère » concentrée à environ 60% en poids de particules pulvérulentes, stabilisée en agent hydrosoluble de stabilisation, permettant d'introduire une quantité déterminée de la suspension mère qui corrige vers le haut toute dérive vers un abaissement de la densité du milieu dense de séparation fine, l'autre réservoir contenant de l'eau permettant d'introduire une quantité déterminée d'eau qui corrige vers le bas toute dérive vers une augmentation de la densité du milieu dense de séparation fine.

34. Procédé selon la revendication 33 **caractérisé en ce que**, dans chaque séparateur hydraulique, la mesure de la densité du milieu dense se fait en continu par des appareils de mesure adaptés qui déclenchent l'ouverture de l'une ou l'autre des électrovannes puis la fermeture dès lors que le niveau de densité seuil « ds » est atteint.

35. Utilisation du procédé selon l'une au moins des revendications 1 à 34, à la séparation sélective des matériaux polymères en mélange, en particulier usagés, issus de la destruction d'automobile et/ou de biens de consommation durables en fin de vie.

## Patentansprüche

1. Verfahren zur selektiven Trennung der in fragmentierter Form auftretenden Bestandteile einer Mischung aus organischen Kunststoffen, wie Polymere und/oder Copolymere, mit einer Dichte gleich 1, die insbesondere schon benutzt wurden und durch Recycling verwertet werden, welches darin besteht, deren Trennung durch Einführung der Mischung in ein dichtes flüssiges Medium, welches eine wässrige Suspension pulverförmiger Partikel ist, die in einer angemessenen Menge in einer wässrigen Phase dispergiert werden, zu erzielen, um ein Dichte "ds" zu erreichen, die als Trenngrenze für die selektiv nach Typ zu trennenden fragmentierten organischen Kunststoffe ausgewählt wird, **dadurch gekennzeichnet, dass** die separierende Suspension selektiv, stabil und in Bezug auf die Dichte unveränderlich gemacht wird auf einer Präzisionsstufe von ± 0,0005 im Verhältnis zu der für die selektive Trennung ausgewählten Dichtegrenze "ds":
a) durch die Größenauswahl von pulverförmigen Partikeln, deren Korngrößenschnitt höchstens 30 µm beträgt, wobei diese so bemessenen festen pulverförmigen Partikel in einer wässrigen Phase in ausreichender Menge dispergiert und vorhanden sind, um die ausgewählte Dichtegrenze "ds" zu erreichen, und
b) durch den Einsatz von mindestens einem dynamischen Stabilisierungsmittel, so dass die separative Suspension mit einem Förderstrom von mindestens 5 m³/h und höchstens 40 m³/h bewegt wird.

2. Verfahren nach Anspruch 1, **dadurch gekennzeichnet, dass** die separative Suspension mit einer Präzision von ± 0,0005 in Bezug auf die zur selektiven Trennung ausgewählte Dichtegrenze "ds" selektiv, stabil und unveränderlich gemacht wird durch die Auswahl einer Größe für die festen pulverförmigen Partikel, deren Korngrößenschnitt vorzugsweise höchstens 20 µm, und vorzugsweise höchsten 5 µm beträgt, wobei die so bemessenen pulverförmigen Partikel in einer wässrigen Phase in ausreichender Menge dispergiert und vorhanden sind, um die ausgewählte Dichtegrenze "ds" zu erreichen.

3. Verfahren nach Anspruch 1, **dadurch gekennzeichnet, dass** die pulverförmigen Partikel natürlicher Herkunft sind und aus der Gruppe pulverförmiger mineralischer Stoffe ausgewählt werden, die bestehen aus Tonarten von Familien, die durch die Gruppe der Kaolinite gebildet werden, und Kaolinit, Dickit, Halloysit, ungeordnete Kaolinite, Serpentine, die Gruppe der Mica, insbesondere Muskovit, Biotit und Paragonit, Pyrophillit und Talk, Illite und Glaukonit umfassen, und durch die Gruppe der Montmorillonite, insbesondere Beidellit, Stevensit, Saponit und Hektorit; durch die Gruppe der Chlorite; durch die Gruppe der Vermikulite; durch die Gruppe der interkalierten Tone, deren einheitliche Struktur eine Kombination aus den vorhergehenden Gruppen ist; durch die Gruppe der faserartigen Tone, insbesondere Attapukgite (Palygorskit) und Sepiolit; durch die Gruppe, die gebildet wird durch Calciumcarbonat (Calcit), Magnesiumcarbonat, Dolomit, Doppelcarbonat von Calcium und Magnesium), Kalziumsulfat-Dihydrat (Gips), Baryumsulfat, Talk, Aluminiumoxid, Silica, Titandioxid und Zirkon.

4. Verfahren nach Anspruch 1, **dadurch gekennzeichnet, dass** die pulverförmigen Partikel synthetischen Ursprungs sind und aus der Gruppe ausgewählt werden, die durch Glaspulver, ausgefälltem Kalziumkarbonat und metallischem Pulver gebildet wird.

5. Verfahren nach mindestens einem der Ansprüche 1 bis 4, **dadurch gekennzeichnet, dass** die pulverförmigen Partikel einen mittleren Durchmesser von höchsten 5 µm und vorzugsweise zwischen 1 µm und 0,005 µm haben.

6. Verfahren nach mindestens einem der Ansprüche 1 bis 5, **dadurch gekennzeichnet, dass** das dynamische Stabilisierungsmittel ausgewählt wird aus der Gruppe, die gebildet wird durch Umrühren mittels eines Rührorgans, durch einen internen Umlauf der Suspension mittels des Rührorgans, durch einen externen Umlauf der Suspension mittels einer Pumpe durch Entnahme der Suspension im Grund des Behälters, wo sie sich befindet und durch Reinjektion in den oberen Teil des Behälters, oder durch die Kombination von Mitteln, die die Verbindung des Umrührens mittels eines Rührorgans mit dem internen und/oder externen Umlauf der Suspension ermöglichen.

7. Verfahren nach mindesten einem der Ansprüche 1 bis 6, **dadurch gekennzeichnet, dass** das dynamische Stabilisierungsmittel ein kontinuierlicher oder diskontinuierlicher Umlauf der Suspension ist.

8. Verfahren nach Anspruch 1, **dadurch gekennzeichnet, dass** der umlaufende Durchsatz der separativen Suspension zwischen 5 und 30 m³/h und vorzugsweise zwischen 5 und 15 m³/h liegt.

9. Verfahren nach mindesten einem der Ansprüche 1 bis 8, **dadurch gekennzeichnet, dass** der Förderstrom der separativen Suspension auf eine stündliche Erneuerungsrate der Suspension von 0,5 bis 4 und vorzugsweise von 0,5 bis 2 eingestellt wird.

10. Verfahren nach mindestens einem der Ansprüche 1 bis 9, **dadurch gekennzeichnet, dass** die wässrige Phase eine Leitfähigkeit von höchstens 50 ms und vorzugsweise von 0,2 ms bis 40 ms aufweist.

11. Verfahren nach mindestens einem der Ansprüche 1 bis 10, **dadurch gekennzeichnet, dass** der Suspension ein wasserlösliches Mittel zur Stabilisierung der rheologischen Merkmale und der Invarianz der scheinbaren Dichte "ds" der Suspension der festen pulverförmigen Partikel zugeführt wird.

12. Verfahren nach Anspruch 11, **dadurch gekennzeichnet, dass** das wasserlösliche Mittel zur Stabilisierung der rheologischen Eigenschaften und der Invarianz der scheinbaren Dichte "ds" der Suspension der festen, pulverförmigen Partikel aus einer Gruppe ausgewählt wird, die durch Phosphate und Polyphosphate, Alkyphosphatester, Alkyphospanate, Alkylsulfat, Alkylsulfonat, Lignin, Lignosulfonate in Form von Kalzium-, Natrium-, Eisen-, Chromsalz, Eisen und Chromsalz gebildet werden, wobei die Copolymere aus Maleinsäureanhydrid und Styrolsulfonsäure, die Copolymere von Methylacrylamid und substituierte (Meth)acrylsäure, die wasserlöslichen Polymere von Acrylsäure, die in saurer Form oder eventuell ganz oder teilweise durch alkalische und/oder erdalkalische Mittel und durch Amine neutralisiert werden, und/oder durch monovalente und/oder polyalente Ionen in Salzform, und/oder in Esterform eingesetzt werden, oder auch aus acrylischen wasserlöslichen Copolymeren ausgewählt werden, über phosphatierte, phosponierte, sulfatierte oder sulfonierte Funktionen verfügen.

13. Verfahren nach einem der Ansprüche 11 und 12, **dadurch gekennzeichnet, dass** das wasserlösliche Stabilisierungsmittel vorzugsweise aus den wasserlöslichen acrylischen Copolymeren, welche folgender allgemeiner Formel entsprechen, ausgewählte wird: 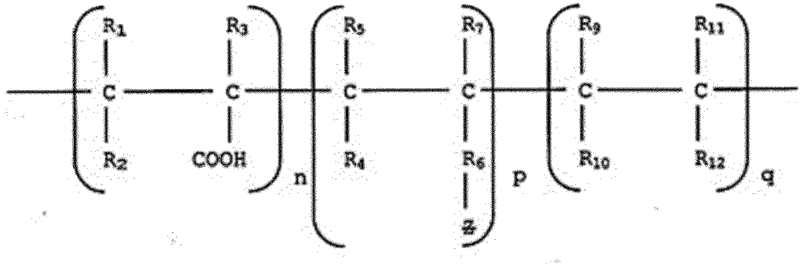
z ist eine Phophat-, Phosphonat-, Sulfat- oder Sulfonateinheit mit mindestens einer freien Säurefunktionsfunktion,
n hat einen Wert zwischen 0 und 95,
p hat einen Wert zwischen 95 und 5,
q hat einen Wert zwischen 0 und 95,
wobei die Kumulierung von n+p+q gleich 100 ist,
R₁ und R₂ können gleichzeitig Wasserstoff sein oder ein Wasserstoff und der andere eine karboxylische veresterte Funktion eines C- bis C₁₂-Alkohols sein kann,
R₃ ist ein Wasserstoff oder ein Alkylrest C₁ bis C₁₂,
R₄ und R₅ sind gleichzeitig oder nicht Wasserstoff oder ein Alkylrest C₁ bis C₁₂, ein substituiertes Aryl oder nicht, eine karboxylische veresterte Funktion, die durch einen C₁ bis C₁₂-Alkohol verestert werden sein kann oder nicht,
R₆ ist ein Radikal, dass eine Verbindung zwischen der Einheit Z und der Polymerkette herstellt, wobei das Radikal R₆ ein Alkylen mit der Formel (-CH2-) sein kann, in welcher r die Werte des Intervalls 1 bis 12 haben kann, ein Alkylenoxid- oder polyoxid mit der Formel (R₈-O) sein kann, in welcher R₈ ein C₁ bis C₄-Alkylen ist und s die Werte zwischen 1 und 30 haben kann, oder auch eine Kombination der beiden Formeln (CH₂) und (R₈-Oₛ) sein kann.
R₇ ist Wasserstoff oder ein C₁ bis C₁₂-Alkylrest,
R₉ und R₁₀ sind gleichzeitig Wasserstoff, oder während eines Wasserstoff ist, ist das andere eine Carboxylgruppe, ein C₁ bis C₁₂-Ester, ein C₁ bis C₁₂-Alkyl, ein C₅- oder C₆-Aryl oder ein Alkylaryl,
R₁₁ ist ein Wasserstoff, eine Carboxylgruppe, ein C₁ bis C₃-Alkyl oder ein Halogen,
R₁₂ ist ein C₁ bis C₁₂-Ester, ein substituiertes Amid oder nicht, ein C₁ bis C₁₂-Alkyl, ein C₅- oder C₆-Aryl, ein Alkylaril, ein Halogen, eine Carboxylgruppe oder eine Alkyl- oder Arylgruppe, die phosphatiert, phosphoriert, sulfatiert, oder sulfoniert ist.

14. Verfahren nach Anspruch 13, **dadurch gekennzeichnet, dass** in der Einheit Z die nicht freien Säurefunktionen durch ein Kation, eine Ammoniumgruppe, ein Amin, ein C₁ bis C₃-Alkyl, ein C₃ bis C₆-Aryl, substituiert oder nicht, ein Alkaryl, ein C₁ bis C₁₂-Ester und vorzugsweise C₁ bis C₃-Ester oder ein substituiertes Amid belegt ist.

15. Verfahren nach Anspruch 13, **dadurch gekennzeichnet, dass** bei der Kumulierung n + p + q, n = 0 ist, wenn q > o, und q = 0 ist, wenn n > 0.

16. Verfahren nach Anspruch 13, **dadurch gekennzeichnet, dass** in den Einheiten R₁ und R₂ der die Carboxyl-Funktion veresternde Alkohol vorzugsweise ein C₁ bis C₄-Alkohol ist.

17. Verfahren nach Anspruch 13, **dadurch gekennzeichnet, dass** in der Einheit R₃ der Alkylrest vorzugsweise ein C₁ bis C₄-Alkylrest ist.

18. Verfahren nach Anspruch 13, **dadurch gekennzeichnet, dass** in den Einheiten R₄ und R₅ der Alkylrest vorzugsweise ein C₁ bis C₄-Alkylrest ist.

19. Verfahren nach Anspruch 13, **dadurch gekennzeichnet, dass** in den Einheiten R₄ und R₅ der die Carboxyl-Funktion veresternde Alkohol vorzugsweise ein C₁ bis C₄-Alkohol ist.

20. Verfahren nach Anspruch 13, **dadurch gekennzeichnet, dass** in der Einheit R7 der Alkylrest vorzugsweise ein C₁ bis C₄-Alkylrest ist.

21. Verfahren nach Anspruch 13, **dadurch gekennzeichnet, dass** der Ester in den Einheiten R₉ und R₁₀ ein C₁ bis C₃-Ester ist.

22. Verfahren nach Anspruch 13, **dadurch gekennzeichnet, dass** das Alkyl in den Einheiten R₉ und R₁₀ vorzugsweise ein C₁ bis C₃-Alkyl ist.

23. Verfahren nach Anspruch 13, **dadurch gekennzeichnet, dass** der Ester in der Einheit R₁₂ vorzugsweise ein C₁ bis C₅-Ester ist.

24. Verfahren nach Anspruch 13, **dadurch gekennzeichnet, dass** das Alkyl in den Einheiten R₁₂ vorzugsweise ein C₁ bis C₃-Alkyl ist.

25. Verfahren nach Anspruch 13, **dadurch gekennzeichnet, dass** das Molekulargewicht der wasserlöslichen Akrylpoymere, die das Stabilisierungsmittel bilden, zwischen 5000 und 100 000 beträgt.

26. Verfahren nach Anspruch 13, **dadurch gekennzeichnet, dass** die wasserlöslichen Acrylpolymere, welche das Stabilisierungsmittel bilden, mindestens teilweise mittels eines Neutralisierungsmittels neutralisiert werden, das aus der Gruppe ausgewählt wird, die durch Natrium-, Kalium-, Ammonium-, Kalzium-, Magnesiumhydroxiden und primären, sekundären und tertiären aliphatischen und/oder zyklischen Aminen, insbesondere Mono-, Di- Triethanolaminen, Mono- und Diethylaminen, Cyclohexylamin und Methylcyclohexylamin, ausgewählt wird.

27. Verfahren nach einem der Ansprüche 10 bis 13, **dadurch gekennzeichnet, dass** die gewichtete Menge des wasserlöslichen Stabilisierungsmittels in % in Trocken-/Trockenmasse des besagten Mittels im Verhältnis zur gewichteten Menge der suspendierten pulverförmigen Partikel ausgedrückt wird zwischen 0,02% und 5% und vorzugsweise zwischen 0,1% und 2% liegt.

28. Verfahren nach mindestens einem der Ansprüche 1 bis 27, **dadurch gekennzeichnet, dass** besagtes Verfahren in mindestens einem hydraulischen Abscheider ausgeführt wird, der mit mindestens einem dynamischen Stabilisierungsmittel versehen ist.

29. Verfahren nach Anspruch 28, **dadurch gekennzeichnet, dass**, wenn besagtes Verfahren in einem einzigen hydraulischen Abscheider vollzogen wird, sich die ausgewählte Dichte "ds" verändert:
- und zunimmt durch kontrolliertes Hinzufügen der definierten und ausgewählten pulverförmigen Partikel zu der in besagtem hydraulischem Abscheider vorhandenen Suspension, bis die neue Dichte "ds" des ausgewählten Grenzwerts erreicht ist,
- und abnimmt durch Hinzufügen von Wasser, bis die neue Dichte "ds" des ausgewählten Grenzwertes erreicht ist.

30. Verfahren nach Anspruch 29, **dadurch gekennzeichnet, dass** die Zunahme oder Abnahme der Dichte der separativen stabilen Suspension unter Umrühren mit einem Rührorgan und/oder einem internen Umlauf und/oder einem Umlauf durch Entnahme des gerade berichtigten dichten wässrigen Mediums im Grund des hydraulischen Abscheiders und durch Reinjektion im oberen Bereich des Abscheiders erfolgt.

31. Verfahren nach Anspruch 28, **dadurch gekennzeichnet, dass** in dem Fall, wo besagtes Verfahren in mehreren hydraulischen Abscheidern ausgeführt wird, die diversen Abscheider hintereinander gestellt werden in einem Reihensystem, das mit den stabilen Suspensionen funktioniert, die jeweils eine präzise Dichtegrenze "ds" erreicht haben in einer Reihenfolge, in der die Dichten zu- oder abnehmen.

32. Verfahren nach einem der Ansprüche 28 bis 31, **dadurch gekennzeichnet, dass** die Grenzdichte "ds" der wässrigen Suspension der Feinstabscheidung kontinuierlich durch geeignete Messmittel kontrolliert und einer Berichtigung unterzogen wird, wenn eine Abweichung festgestellt wird.

33. Verfahren nach Anspruch 32, **dadurch gekennzeichnet, dass** jeder hydraulische Abscheider in Bezug auf die Dichte des dichten Mediums, das er enthält, mittels zweier Magnetventile gesteuert wird, die sich jeweils zu zwei mit zwei Behältern verbundenen Kreisen hin öffnen, wobei einer der Behälter eine "Muttersuspension" mit einer Konzentration von etwa 60% des Gewichts der pulverförmigen Partikel, die mit einem wasserlöslichen Stabilisierungsmittel stabilisiert ist, enthält, und das Einfügen einer bestimmten Menge der Muttersuspension ermöglicht, welche eine Abweichung in der Dichte des dichten Mediums der Feinstabscheidung nach unten nach oben hin berichtigt, wohingegen der andere Behälter Wasser enthält, was das Einfügen einer bestimmten Menge Wasser ermöglicht, welches eine Abweichung der Dichte des dichten Mediums der Feinstabscheidung nach oben nach unten hin berichtigt.

34. Verfahren nach Anspruch 33, **dadurch gekennzeichnet**, das in jedem hydraulischen Abscheider die Messung der Dichte des dichten Mediums kontinuierlich durch geeignete Messgeräte erfolgt, die das Öffnen eines der Magnetventile und dann das Schließen auslösen, sobald die Grenzdichte "ds" erreicht ist.

35. Benutzung des Verfahrens nach mindestens einem der Ansprüche 1 bis 34 zur selektiven Abscheidung von Polymerstoffen in einer Mischung, insbesondere gerauchter Materialien, die aus der Zerstörung von Fahrzeugen und/oder langlebigen Gebrauchsgüter stammen.

## Claims

1. A method for selectively separating each one of the components of a mixture of synthetic organic materials such as polymers and/or copolymers, particularly used ones, for recycling in order to upgrade them, having a density of at least 1, which are in a fragmented form, consisting in separating these by introducing such mixture into a dense liquid medium, which is an aqueous suspension of powdery particles dispersed in an adequate amount in an aqueous phase, in order to create a density level "ds" selected to be the separation threshold of the various fragmented synthetic organic materials to be selectively separated according to their types, **characterized in that** said separative suspension is made selective, stable and invariant as regards density with a degree of accuracy of ±0.0005 relative to the density threshold "ds" selected for the selective separation:
a) by the dimensional selection of powdery particles, the particle size distribution of which is at most 30µm, with such solid powdery particles having such dimensions being dispersed and present in an aqueous phase in sufficient amount to reach the selected density threshold "ds", and
b) by implementing at least one dynamic stabilizing means so that the separative suspension moves with a circulating flow of at least 5m³/hr and at most 40m³/hr.

2. A method according to claim 1, **characterized in that** said separative suspension is made selective, stable and invariant as regards density with a degree of accuracy of ±0.0005 relative to the density threshold "ds" selected for the selective separation, through the dimensional selection of powdery solid particles, the particle size distribution of which is preferably at most 20µm, and most preferably at most 5µm, with such powdery particles having such dimensions being dispersed and present in an aqueous phase in an amount sufficient to reach the selected density threshold "ds".

3. A method according to claim 1, **characterized in that** the powdery particles have a natural origin and are selected in the group of powdery mineral materials consisting of clays belonging to the families formed by the kaolinite group, comprising kaolinite, dickite, halloysite, disordered kaolinites, serpentines, the mica group, specifically muscovite, biotite and paragonite, pyrophyllite and talc, illite and glauconite, by the montmorillonite group, specifically beidellite, stevensite, saponite, and hectorite; by the chlorite group; by the vermiculite group; by the interbedded clays group, the unit structure of which is a combination of the preceding groups; by the fibrous clays group, specifically attapulgite (palygorskite), sepiolite; by the group formed by calcium carbonate (calcite), magnesium carbonate, dolomite (double carbonate of calcium and magnesium), calcium sulphate dihydrate (gypsum), barium sulphate, talc, alumina, silica, titanium dioxide, zirconia.

4. A method according to claim 1, **characterized in that** the powdery particles have a synthetic origin and are selected from the group consisting of glass powders, precipitated calcium carbonate, metal powders.

5. A method according to at least one of claims 1 to 4, **characterized in that** the powdery particles have a median diameter of at most 5µm and preferably between 1µm and 0.005µm.

6. A method according to at least one of claims 1 to 5, **characterized in that** the dynamic stabilizing means is selected from the group consisting of a stirring using a mobile stirrer, by an internal recirculation of the suspension using the mobile stirrer, by an external recirculation of the suspension using a pump by sampling the suspension at the bottom of the container where it is stored and by re-injection into the upper part of said container, or by combining the means making it possible to associate stirring using a mobile stirrer and internal and/or external recirculation of the suspension.

7. A method according to at least one of claims 1 to 6, **characterized in that** the dynamic stabilizing means is a continuous or discontinuous recirculation of the suspension.

8. A method according to claim 1, **characterized in that** the circulating flow of the separative suspension ranges from 5 to 30m³/hr and preferably from 5 to 15m³/hr.

9. A method according to at least one of claims 1 to 8, **characterized in that** the circulating flow of the separative suspension is set to a time change rate of said suspension between 0.5 and 4 and preferably between 0.5 and 2.

10. A method according to at least one of claims 1 to 9, **characterized in that** the conductivity of the aqueous phase is at most 50ms and preferentially ranges from 0.2ms to 40ms.

11. A method according to at least one of claims 1 to 10, **characterized in that** a water soluble agent for facilitating the stabilizing of the rheological and invariant properties of the bulk density "ds" of the solid powdery particles suspension is introduced into said suspension.

12. A method according to claim 11, **characterized in that** the water soluble agent for facilitating the stabilizing of the rheological and invariant properties of the bulk density "ds" of the solid powdery particles suspension is selected from the group consisting of phosphates and polyphosphates, alkylphosphate esters, alkylphosphonate, alkylsulphate, alkylsulphonate, lignin, lignosulphonates as calcium, sodium, iron, chromium, iron and chromium salts, maleic anhydride and styrene sulphonic acid copolymers, substituted, neutralized, esterified or not methacrylamide and (methyl)acrylic copolymers, methylacrylamido-alkyl sulphonic acid and (methyl)acrylamide copolymers, water soluble acrylic acid polymers used as acids or, optionally, wholly or partly neutralized by alkaline and/or alkaline earth agents, by amines and/or salified by monovalent and/or polyvalent ions, and/or esterified or among acrylic, water soluble copolymers having phosphated, phosphonated, sulphated, sulphonated functions.

13. A method according to any one of claims 11 and 12, **characterized in that** the water soluble stabilizing agent is preferably selected from the water soluble acrylic copolymers, having the following general formula: 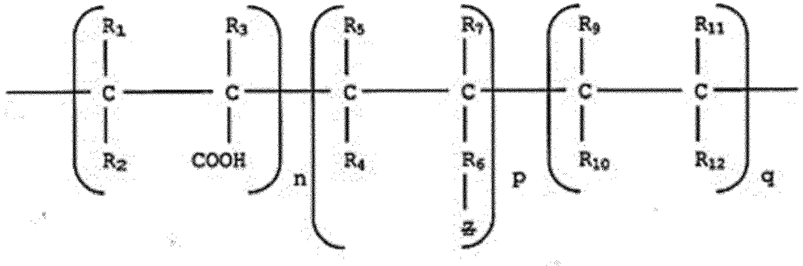
✔ Z is a pattern of the phosphate, phosphonate, sulfate, sulphonate type, containing at least one free acid function,
✔ has a value ranging from 0 to 95,
✔ has a value ranging from 95 to 5,
✔ has a value ranging from 0 to 95,
✔ with the n+p+q sum being equal to 100,
✔ R₁ and R₂ may simultaneously be hydrogen or while one is hydrogen, the other is a carboxylic function esterified or not by C₁- to C₁₂-alcohol,
✔ R₃ is hydrogen or C₁- to C₁₂-alkyl,
✔ R₄ and R₅ may, simultaneously or not, be hydrogen or C₁- to C₁₂-alkyl, a substituted or unsubstituted arly, a carboxylic function esterified or not by C₁- to C₁₂-alcohol,
✔ R₆ is a group which establishes the link between the Z pattern and the polymer chain, and such R₆ group can be alkylene having the formula (-CH₂-)ᵣ, wherein r can take values in the 1 to 12 range, an oxide or a polyalkylene oxide having the formula (R₈-O)ₛ, wherein R₈ is C₁- to C₄-alkylene and s can take values in the 1 to 30 range, or a combination of both formulas (CH₂)ᵣ and (R₈-O)ₛ,
✔ R₇ is hydrogen or a C₁- to C₁₂-alkyl group,
✔ R₉ and R₁₀ simultaneously are hydrogen or while one is hydrogen, the other is a carboxyl group, C₁- to C₁₂-ester, C₁- to C₁₂-alkyl, C₅- or C₆-aryl or alkylaryl,
✔ R₁₁ is hydrogen, a carboxylic group, C₁- to C₃-alkyl or halogen,
✔ R₁₂ is C₁- to C₁₂-ester, a substituted or unsubstituted amide, C₁- to C₁₂-alkyl, C₅- or C₆-aryl, alkaryl, halogen, a carboxylic group or a phosphated, phosphorous, sulphated, sulphonated alkyl or aryl group.

14. A method according to claim 13, **characterized in that** in the Z pattern, the non-free acid functions are occupied by a cation, an ammonium group, an amine, C₁- to C₃-alkyl, substituted or unsubstituted C₃- to C₆-aryl, alkylaryl, preferably C₁- to C₁₂-, preferentially C₁- to C₃-ester, or a substituted amide.

15. A method according to claim 13, **characterized in that** in the n+p+q sum, n=0, when q>0 and q=0 when n>0.

16. A method according to claim 13, **characterized in that**, in the R₁ and R₂ patterns, the alcohol esterifying the carboxyl function is preferably C₁- to C₄-alcohol.

17. A method according to claim 13, **characterized in that**, in the R₃ pattern, the alkyl group is preferably C₁- to C₄-alkyl.

18. A method according to claim 13, **characterized in that**, in the R₄ and R₅ patterns, the alkyl group is preferably C₁- to C₄-alkyl.

19. A method according to claim 13, **characterized in that**, in the R₄ and R₅ patterns, the alcohol esterifying the carboxyl function is preferably C₁- to C₄-alcohol.

20. A method according to claim 13, **characterized in that**, in the R₇ pattern, the alkyl group is preferably C₁- to C₄-alkyl.

21. A method according to claim 13, **characterized in that**, in the R₉ and R₁₀ patterns, ester is preferably C₁- to C₃-ester.

22. A method according to claim 13, **characterized in that**, in the R₉ and R₁₀ patterns, alkyl is preferably C₁- to C₃-alkyl.

23. A method according to claim 13, **characterized in that**, in the R₁₂ pattern, ester is preferably C₁- to C₅-ester.

24. A method according to claim 13, **characterized in that**, in the R₁₂ pattern, alkyl is preferably C₁- to C₃-alkyl.

25. A method according to claim 13, **characterized in that** the molecular weight of the water soluble acrylic copolymers forming the stabilizing agent ranges from 5,000 to 100,000.

26. A method according to claim 13, **characterized in that** the water soluble acrylic copolymers forming the stabilizing agent are at least partially neutralized by a neutralizing agent selected from the group consisting of sodium, potassium, ammonium, calcium, magnesium hydroxides and the aliphatic and/or cyclic primary, secondary and tertiary amines, specifically the mono-, di-, tri- ethanolamines, mono-and diethylamines, cyclohexylamine, methylcyclohexylamine.

27. A method according to any one of claims 10 to 13, **characterized in that** the amount by weight of the water soluble stabilizing agent expressed as a dry/dry weight % of said agent relative to the amount by weight of suspended powdery particles ranges from 0.02% to 5% and preferably from 0.1% to 2%.

28. A method according to at least one of claims 1 to 27, **characterized in that** said method is executed in at least one hydraulic separator provided with at least one dynamic stabilizing means.

29. A method according to claim 28, **characterized in that**, when said method is executed in a single hydraulic separator, the selected density "ds" evolves:
- in the ascending order, by controlled addition of the powdery particles defined and selected in the present suspension in said hydraulic separator, until the new selected density threshold "ds" is reached
- in the descending order by addition of water until the new selected density threshold "ds" is reached.

30. A method according to claim 29, **characterized in that** the evolution of the density of the stable separative suspension, in the ascending or descending order, is carried out under stirring using a stirring mobile device and/or an internal recirculation and/or recirculation by sampling at the bottom of the hydraulic separator and reinjection at the top of said separator of the dense aqueous medium being corrected.

31. A method according to claim 28, **characterized in that**, when said method is executed in a plurality of hydraulic separators, the various separators are positioned one after the other, in a cascade system operating with stable suspensions each having a precise density threshold "ds", in the ascending or descending order of density.

32. A method according to any one of claims 28 to 31, **characterized in that** the threshold density "ds" of the fine separation aqueous suspension is continuously controlled by suitable measuring means and subjected to correction when a drift is detected.

33. A method according to claim 32, **characterized in that** each hydraulic separator is controlled with respect to the dense medium density contained therein using two solenoid valves each opening onto two circuits connected to two tanks, with one tank containing a "stock" suspension concentrated to about 60% by weight of powdery particles, stabilized by a water soluble stabilizing agent, thus making it possible to introduce a determined quantity of the stock suspension which fixes up any drift towards a lowering of the density of the fine separation dense medium, with the other tank containing water thus making it possible to introduce a determined quantity of water which fixes down any drift towards an increase in the density of the fine separation dense medium.

34. A method according to claim 33, **characterized in that**, in each hydraulic separator, the measurement of the dense medium density is carried out continuously by measuring devices adapted to trigger the opening of one or the other of the solenoid valves, and then the closing thereof when the threshold density level "ds" is reached.

35. Utilization of the method according to at least one of claims 1 to 34, for the selective separation of a mixture of polymer materials, specifically used ones, resulting from the destruction of automobiles and/or durable consumer goods that have reached the end of their serviceable lives.
